# EUROPEAN PATENT SPECIFICATION

(11) **EP 3 778 791 B1**
(45) Date of publication and mention of the grant of the patent: **22.10.2025**
(21) Application number: 19776997.9
(22) Date of filing: 18.03.2019
(51) Int. Cl.: C09D 11/101, B41J 2/01, B41M 5/00, C09D 11/30, C09D 11/38, B41M 7/00, C08K 5/18, C08K 5/3435

(54) **PHOTOCURABLE INK COMPOSITION AND IMAGE FORMING METHOD**
LICHTHÄRTBARE TINTENZUSAMMENSETZUNG UND BILDERZEUGUNGSVERFAHREN
COMPOSITION D'ENCRE PHOTODURCISSABLE ET PROCÉDÉ DE FORMATION D'IMAGE

(30) Priority: 27.03.2018 JP 2018059525
(43) Date of publication of application: 17.02.2021
(73) Proprietor: FUJIFILM Corporation, Tokyo 106-8620 (JP)
(72) Inventor: SATO, Noriaki, Ashigarakami-gun, Kanagawa 258-8577 (JP); SUZUKI, Shota, Ashigarakami-gun, Kanagawa 258-8577 (JP)
(74) Representative: Klunker IP Patentanwälte PartG mbB
(86) International application number: PCT/JP2019/011123
(87) International publication number: WO 2019/188482

(56) References cited:
- EP-A1- 2 085 439
- EP-A1- 2 088 178
- EP-A1- 2 277 955
- EP-A1- 3 342 792
- EP-A1- 3 587 512
- EP-A1- 3 604 458
- EP-A1- 3 617 283
- WO-A1-2009/139454
- WO-A1-2009/139455
- WO-A1-2017/033984
- WO-A1-2017/033984
- JP-A- 2008 024 830
- JP-A- 2009 185 157
- JP-A- 2011 225 848
- JP-A- 2012 140 615
- JP-A- 2012 188 478
- JP-A- 2015 112 722

## Description

### BACKGROUND OF THE INVENTION

### 1. Field of the Invention

The present disclosure relates to a photocurable ink composition and a method for forming an image.

### 2. Description of the Related Art

To date, photocurable ink compositions including amine compounds are known.

For example, JP2015-533897A discloses, as a radiation-curable ink composition having durability to applications to outdoor printing and useful for such applications, a radiation-curable ink composition that includes a colorant and a 2,2,6,6-tetramethylpiperidinyl compound. A first 2,2,6,6-tetramethylpiperidinyl compound is present in the radiation-curable ink composition in a concentration of more than 0.5% by weight. A hindered amine group of the first 2,2,6,6-tetramethylpiperidinyl compound is substituted with only carbon or hydrogen. The first 2,2,6,6-tetramethylpiperidinyl compound is solid at 20°C and does not include a carbon-carbon double bond.

Furthermore, WO2017/033984A discloses, as a photosensitive composition that is capable of forming a film having high hardness and good adhesiveness to a substrate and that has good storage stability, a photosensitive composition that contains a resin including a specific structural unit including a hindered amine structure and a radical-polymerizable monomer and further discloses a method for forming an image by using this photosensitive composition as an ink composition.
WO 2017/033984 A1 teaches a photosensitive composition containing a resin which includes a structural unit A represented by Formula (1) or (2) below and a structural unit B represented by Formula (3), (4), or (5) below; and a radically polymerizable monomer, an image forming method, a film forming method, a resin, an image, and a film. R¹¹, R²¹, R³¹, R⁴¹, and R⁵¹ represent H or a hydrocarbon group, R¹² to R¹⁴ and R²² to R²⁴ represent a hydrocarbon group, H, or an OH group, R⁴², R⁴³, R⁵², and R⁵³ represent H or a hydrocarbon group, L¹ to L³ represent a single bond or a linking group, X¹ represents -O- or -NR¹⁵ -, X² represent -O- or -NR²⁵-, R¹⁵ and R²⁵ represent H or a hydrocarbon group, and Cy¹ represents a hydrocarbon group which may contain O and has a cyclic structure: 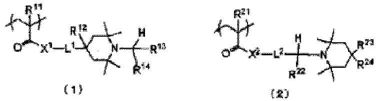 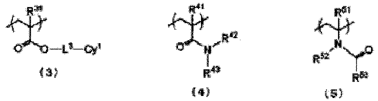 EP 2277955 A1 provides an energy ray-curable ink composition excellent in the continuous discharge property, and excellent in curability and adherability. This document also relates to an energy ray-curable ink composition which contains a coloring agent, contains only a monofunctional monomer having an acrylic equivalent of 300 or less, and having one ethylenic double bond in one molecule, and a polyfunctional monomer having an acrylic equivalent of 150 or less, and having two or more ethylenic double bonds in one molecule as a polymerizable compound, contains an ±-aminoalkylphenone compound and a thioxanthone compound as a photopolymerization initiator, and contains a silicone compound having a polydimethylsiloxane structure as a surface conditioner.
EP 2088178 A1 teaches an energy ray-curable ink composition which is excellent in curability and adhesion, and is also excellent in storage stability. This document also relates to an energy ray-curable ink composition comprising a coloring material; a polyfunctional monomer having three or more ethylenical double bonds in one molecule as a polymerizable compound; an ±-aminoalkylphenone-based compound and a thioxanthone-based compound as photopolymerization initiators; and a hindered amine-based compound having a 2,2,6,6-tetramethylpiperidinyl group as an antigelling agent.
EP 3604458 A1 discloses a photocurable ink composition containing a resin that includes a unit (1) and/or a unit (2): 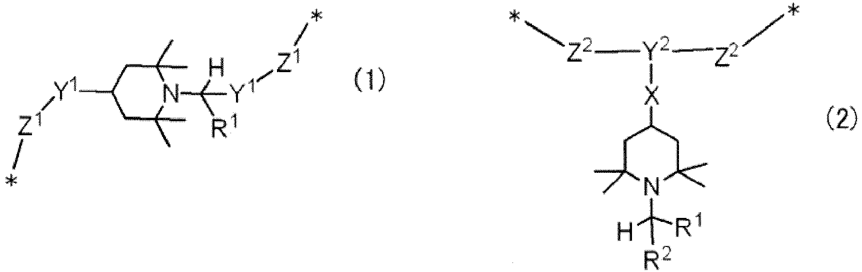 and a monofunctional monomer and/or a bifunctional monomer, in which a total content of the monofunctional monomer and the bifunctional monomer is 50% by mass or more, and a method for forming an image. Two R¹ each independently represent H or an alkyl group, two Y¹ each independently represent a single bond or a divalent group, two Z¹ each independently represent a single bond, -O(C=O)O-, -NHC(=O)-, or -NHC(=O)O-, R² represents H or a hydrocarbon group, X represents -O- or -C(=O)O-, Y² represents a trivalent group, two Z² each independently represent a single bond, -C(=O)O-, -O(C=O)O-, -NHC(=O)-, or -NHC(=O)O-.
EP 3587512 A1 teaches a photo-curable ink composition, which contains an amine resin including a constituent unit A represented by a formula (1) or a formula (2) below and a constituent unit B represented by any of a formula (3) to a formula (7) below, and a radical-polymerizable monomer. In the radical-polymerizable monomer, a content of a radical-polymerizable monomer having an acid group is 1.5 mmol or less per 100 g of the photo-curable ink composition. 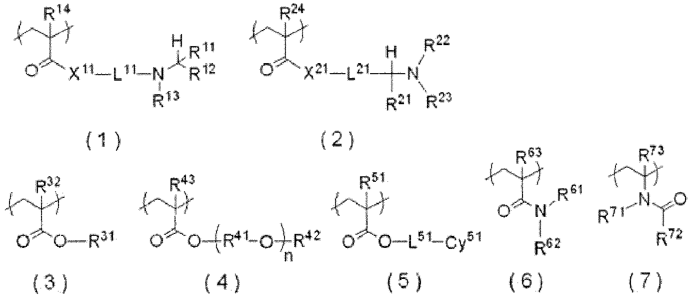 A method for forming an image using the photo-curable ink composition is also provided.
EP 2085439 A1 teaches a photocurable composition that includes a polymerizable compound, a photopolymerization initiator, a compound represented by Formula (I) below: 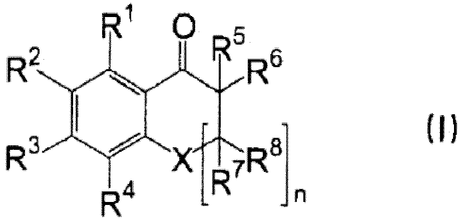 and an amine compound, the photopolymerization initiator comprising an acylphosphine oxide compound and/or an ±-aminoacetophenone compound in Formula (I) above, X denotes O, S, or NR, n denotes 0 or 1, R denotes a hydrogen atom, an alkyl group, or an acyl group, R¹, R², R³, R⁴, R⁵, R⁶, R⁷, and R⁸ independently denote a hydrogen atom or a monovalent substituent, and two of R¹, R², R³, and R⁴ that are adjacent may be bonded to each other to form a ring. There are also provided a photocurable ink composition that includes the photocurable composition and a colorant, an ink composition for photocuring inkjet recording that includes the photocurable ink composition, a process for producing a photocured material that includes preparing the photocurable composition and irradiating the photocurable composition with light having a light emission peak in the range of at least 340 nm but no greater than 400 nm, and an inkjet recording method that includes discharging the ink composition onto a recording medium and irradiating the ink composition with actinic radiation.
EP 3617283 A1 teaches a photocurable ink composition including a resin which contains an amino group having one or more hydrogen atoms on a carbon atom at an α-position and having an amine value of 3.5 mmol/g to 12 mmol/g, and a radically polymerizable monomer, in which the radically polymerizable monomer contains at least one of a monofunctional radically polymerizable monomer or a bifunctional radically polymerizable monomer, a total content of the monofunctional radically polymerizable monomer and the bifunctional radically polymerizable monomer is 50% by mass or greater with respect to a total mass of the photocurable ink composition, and a content of a radically polymerizable monomer containing an acid group in the radically polymerizable monomers is 1.5 mmol or less per 100 g of the photocurable ink composition; and an image forming method performed by using the photocurable ink composition.

### SUMMARY OF THE INVENTION

However, regarding photocurable ink compositions including amine compounds, it may be desirable to further improve glossiness of a cured film (for example, an image) to be formed.

An object of an embodiment of the present disclosure is to provide a photocurable ink composition capable of forming a cured film having high glossiness.

An object of another embodiment of the present disclosure is to provide a method for forming an image, the method being capable of forming an image having high glossiness.

The present invention is defined in the appended claims.

According an embodiment of the present disclosure, there is provided a photocurable ink composition capable of forming a cured film having high glossiness.

According another embodiment of the present disclosure, there is provided a method for forming an image, the method being capable of forming an image having high glossiness.

### DESCRIPTION OF THE PREFERRED EMBODIMENTS

In the present specification, a range of numerical values expressed by using "to" means a range including a numerical value described before "to" as a minimum and a numerical value described after "to" as a maximum.

In the present specification, when a plurality of substances corresponding to each component are present in a composition, an amount of each component in the composition means a total amount of the plurality of substances that are present in the composition unless otherwise stated.

In the present specification, the term "step" refers to not only an independent step but also a step that is not clearly distinguished from another step as long as a desired purpose of the step is achieved.

In the present specification, the term "light" covers a concept that includes active energy rays such as γ-rays, β-rays, electron beams, ultraviolet rays, visible rays, and infrared rays.

In the present specification, ultraviolet rays may be referred to as "UV (ultraviolet) light".

In the present specification, light emitted from an LED (light emitting diode) light source may be referred to as "LED light".

In the present specification, the term "(meth)acrylic acid" covers a concept that includes both acrylic acid and methacrylic acid, the term "(meth)acrylate" covers a concept that includes both acrylate and methacrylate, and the term "(meth)acryloyl group" covers a concept that includes both an acryloyl group and a methacryloyl group.

In the present specification, a ratio of constituent units in a resin may be referred to as a "copolymerization ratio".

In the present specification, hydrocarbon groups such as alkyl groups, aryl groups, alkylene groups, and arylene groups may be branched or may have a ring structure unless otherwise stated.

In the present specification, combinations of two or more preferred embodiments are more preferred embodiments.

In the present specification, the symbol "*" in a chemical formula represents a binding site.

### Photocurable Ink Composition

A photocurable ink composition (hereinafter, also simply referred to as an "ink") according to the present disclosure contains an amine A which is an amine compound having an α-hydrogen atom and a hindered amine structure; an amine B which is a tertiary amine compound that has an α-hydrogen atom, that has no hindered amine structure, and that has no radical-polymerizable group; at least one of a monofunctional radical-polymerizable monomer or a bifunctional radical-polymerizable monomer; and a sensitizer (D) which is at least one of a compound represented by formula (D1) below, a compound represented by formula (D1a) below, or a compound represented by formula (D2) below, in which a total content of the monofunctional radical-polymerizable monomer and the bifunctional radical-polymerizable monomer is 50% by mass or more based on a total amount of the photocurable ink composition.

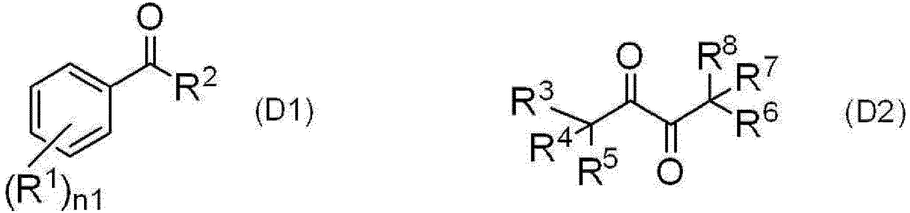

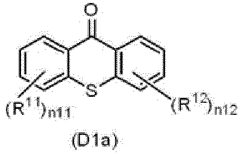

In formula (D1), R¹ represents a halogen atom, an alkyl group, an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, or a sulfo group; and R² represents an alkyl group or an aryl group; and n1 represents an integer of 0 to 5.

When n1 is an integer of 1 to 5, R² and at least one of R¹ may be bound together to form a ring.

When n1 is an integer of 2 to 5, the plurality of R¹ may be the same or different.
In formula (D1a), R¹¹ has the same definition as R¹ in formula (D1), n11 represents an integer of 0 to 4, and R¹² and n12 have the same definitions as R¹¹ and n11

In formula (D2), R³ to R⁸ each independently represent a hydrogen atom, a halogen atom, an alkyl group, or an aryl group.

According to the ink according to the present disclosure, a cured film (for example, an image) having high glossiness can be formed.

The reasons why this advantage is achieved may be as follows. However, the ink according to the present disclosure is not limited by the following reasons.

In general, when an ink containing a radical-polymerizable monomer is applied onto a substrate, and the applied ink (hereinafter, also referred to as an "ink film") is irradiated with light, the radical-polymerizable monomer in the ink film is radically polymerized, and as a result, the ink film is cured to form a cured film (for example, an image).

However, in such an ink film, radical polymerization of the radical-polymerizable monomer may be inhibited by oxygen in the air. Hereinafter, this phenomenon is also referred to as "radical polymerization inhibition due to oxygen". In particular, the radical polymerization inhibition due to oxygen easily occurs, in an ink film, on the surface and near the surface of the ink film (hereinafter, also simply referred to as "near the surface of an ink film"), which is a portion in contact with the air. When the radical polymerization inhibition due to oxygen occurs, curability near the surface of the ink film may be insufficient compared with curability inside the ink film. As a result, variation in curability may increase in a film thickness direction of the ink film. Such an increase in the variation in curability in the film thickness direction of the ink film may generate creases of the ink film during curing by radical polymerization, and glossiness of the resulting cured film may decrease due to the creases.

In consideration of suppressing the above-described radical polymerization inhibition due to oxygen, the ink according to the present disclosure contains the amine A and the amine B, each of which is an amine compound having an α-hydrogen atom. The α-hydrogen atom has a function of suppressing the radical polymerization inhibition due to oxygen. Accordingly, since the ink contains the amine compounds having α-hydrogen atoms, the radical polymerization inhibition due to oxygen can be suppressed in an ink film to be formed, and curability of the ink film can be ensured. The base of the effect of improving glossiness of a cured film formed by using the ink according to the present disclosure is probably the above-described function of the amine compounds having α-hydrogen atoms (i.e., the function of suppressing the radical polymerization inhibition due to oxygen and ensuring the curability of the ink film).

Herein, the α-hydrogen atom refers to a hydrogen atom that is directly bound to a carbon atom (hereinafter, also referred to as an "α-carbon atom") located at the α-position with respect to a nitrogen atom in an amine compound. For example, in formula (HA1) below, each of the three "H" that are clearly shown is the α-hydrogen atom. Specifically, the amine compound having an α-hydrogen atom refers to an amine compound including a carbon atom (i.e., an α-carbon atom) that is located at the α-position with respect to a nitrogen atom and including a hydrogen atom (i.e., an α-hydrogen atom) that is directly bound to this α-carbon atom.

Of the amine A and the amine B contained in the ink according to the present disclosure, the amine A, which is an amine compound having an α-hydrogen atom and a hindered amine structure, is considered to have a function of ensuring the minimum curability across the film thickness direction of the ink film, the minimum curability being a prerequisite for the effect of improving glossiness.

On the other hand, the amine B, which is a tertiary amine compound that has an α-hydrogen atom, that has no hindered amine structure, and that has no radical-polymerizable group, is considered to reinforce the curability near the surface of the ink film by cooperating with the sensitizer (D). As described above, a portion near the surface of the ink film easily undergoes radical polymerization inhibition due to oxygen. In the case where the ink contains the amine B and the sensitizer (D), when the resulting ink film is irradiated with light, presumably, the sensitizer (D) is electronically excited, and the electronically excited sensitizer (D) abstracts the α-hydrogen atom of the amine B to generate a radical. The generated radical is considered to reinforce the curability near the surface of the ink film.

Regarding the amine B, more specifically, since the amine B has no hindered amine structure, which is bulky, the α-hydrogen atom of the amine B is considered to be easily abstracted. Furthermore, since the amine B has no radical-polymerizable group, incorporation of the amine B into a polymer chain is prevented during radical polymerization of the radical-polymerizable monomer. Consequently, the mobility of the amine B is highly maintained, and the amine B is easily present near the surface of the ink film. As a result, the curability near the surface of the ink film may be effectively reinforced. In addition, since the amine B is a tertiary amine, the function of the amine compound having an α-hydrogen atom is more effectively exhibited, and consequently, the curability near the surface of the ink film may be effectively reinforced.

In the case where a cured film is formed by using the ink according to the present disclosure, the ink containing both the amine A and amine B and containing the sensitizer (D), it is assumed that the amine A ensures the minimum curability, which is a prerequisite for the effect of improving glossiness, and the combination of the amine B and the sensitizer (D) reinforces the curability near the surface of an ink film. Therefore, in the case where a cured film is formed by using the ink according to the present disclosure, probably, the variation in the curability in the film thickness direction of the ink film is reduced, and consequently, a decrease in glossiness of the cured film due to this variation is suppressed.

According to the ink according to the present disclosure, a cured film having high glossiness is probably formed for the reasons described above.

As described above, the amine A contained in the ink according to the present disclosure has a function of ensuring the minimum curability of an ink film.

Therefore, the ink according to the present disclosure, the ink containing the amine A, also ensures blocking resistance of a cured film, scratch resistance of a cured film, and adhesiveness between a cured film and a substrate (hereinafter, also referred to as "adhesiveness of a cured film").

In the ink according to the present disclosure, the hindered amine structure in the amine A contributes to an improvement in the storage stability of the ink.

Furthermore, in the ink according to the present disclosure, since the amine A has a hindered amine structure, ejection stability in the case where the ink is used as an ink jet ink (that is, ejection stability of the ink ejected from an ink jet nozzle, hereinafter, the same) improves.

The ink according to the present disclosure contains at least one of a monofunctional radical-polymerizable monomer or a bifunctional radical-polymerizable monomer.

Needless to say, the at least one of the monofunctional radical-polymerizable monomer or the bifunctional radical-polymerizable monomer plays a role in forming a cured film by being radically polymerized.

The ink according to the present disclosure may contain a tri- or higher functional radical-polymerizable monomer. However, in the ink according to the present disclosure, the total content of the monofunctional radical-polymerizable monomer and the bifunctional radical-polymerizable monomer based on the total amount of the ink is 50% by mass or more. Since the total content is 50% by mass or more, the at least one of the monofunctional radical-polymerizable monomer or the bifunctional radical-polymerizable monomer also plays a role in ensuring fluidity of the ink (in other words, a role of a main liquid component of the ink).

The ink according to the present disclosure can be used as various types of ink without particular limitation, and, in particular, can be suitably used as an ink j et ink.

As described above, the ink according to the present disclosure contains the monofunctional radical-polymerizable monomer and the bifunctional radical-polymerizable monomer in a total content of 50% by mass or more, and thus the fluidity is ensured. Therefore, when the ink according to the present disclosure is used as an ink jet ink, the ejection stability is ensured.

The ink according to the present disclosure may be an ink containing a colorant or an ink containing no colorant (a so-called clear ink).

Hereafter, each component that can be contained the ink according to the present disclosure will be described.

### Amine A

The ink according to the present disclosure contains an amine A.

The amine A is an amine compound having an α-hydrogen atom and a hindered amine structure.

The hindered amine structure is a hindered amine structure represented by formula (HA0) below (hereinafter, also referred to as an "HA0 structure").

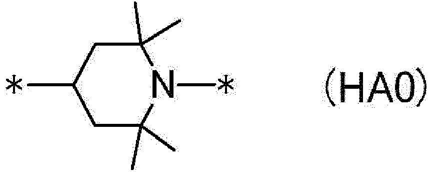

In formula (HA0), * each represent a binding site.

The amine A may have a hindered amine structure and an α-hydrogen atom in any form.

From the viewpoint of improving glossiness of the cured film, the amine A preferably has a structure represented by formula (HA1) below (hereinafter, also referred to as an "HA1 structure").

The HA1 structure includes a hindered amine structure and three α-hydrogen atoms.

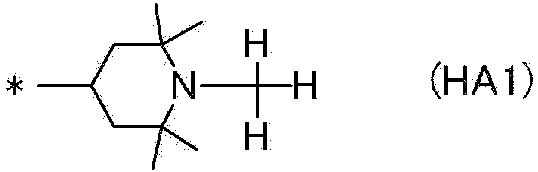

In formula (HA1), * represents a binding site.

The HA1 structure includes, as the three "H" that are clearly shown in formula (HA1), three α-hydrogen atoms.

Therefore, when the amine A has the HA1 structure, radical polymerization inhibition due to oxygen is effectively suppressed, and consequently, glossiness of the cured film effectively improves.

For the same reason, when the amine A has the HA1 structure, blocking resistance, scratch resistance, and adhesiveness of the cured film further improve.

The number-average molecular weight (Mn) of the amine A is not particularly limited, but is preferably from 500 to 10,000 and more preferably from 1,000 to 10,000.

When the Mn of the amine A is 500 or more (preferably 1,000 or more), the amine A more effectively exhibits its function (the function of ensuring curability, which is a prerequisite for the effect of improving glossiness), and glossiness of the cured film further improves.

When the Mn of the amine A is 10,000 or less, storage stability and ejection stability of the ink further improve.

The lower limit of the Mn of the amine A is still more preferably 1,400 or more, still more preferably 1,500 or more, still more preferably 1,800 or more, and still more preferably 2,000 or more.

The upper limit of the Mn of the amine A is more preferably 5,000 or less, and still more preferably 3,500.

In the present specification, the number-average molecular weight (Mn) and the weight-average molecular weight (Mw) are each a value measured by gel permeation chromatography (GPC).

However, regarding a compound whose Mn cannot be accurately measured by GPC because of its low molecular weight, the molecular weight determined from the chemical structure of the compound is adopted as the Mn of the compound. This also applies to the Mw.

In the measurement by gel permeation chromatography (GPC), an HLC (registered trademark)-8020GPC (Tosoh Corporation) is used as a measurement device, three TSKgel (registered trademark) Super Multipore HZ-H columns (4.6 mm ID × 15 cm, Tosoh Corporation) are used as columns, and THF (tetrahydrofuran) is used as an eluant. Regarding measurement conditions, the measurement is conducted at a sample concentration of 0.45% by mass, at a flow rate of 0.35 mL/min, with an amount of sample injected of 10 µL, and at a measurement temperature of 40°C by using a refractive index (RI) detector.

A calibration curve is prepared from eight samples of "Standard sample TSK standard, polystyrene" manufactured by Tosoh Corporation: "F-40", "F-20", "F-4", "F-1", "A-5000", "A-2500", and "A-1000" and "n-propylbenzene".

The amine A preferably includes a structural unit derived from a (meth)acrylate including an α-hydrogen atom and a hindered amine structure and more preferably includes a structural unit represented by formula (1) below (hereinafter, also referred to as a "unit (1)").

When the amine A includes the structural unit derived from a (meth)acrylate including an α-hydrogen atom and a hindered amine structure (preferably, the unit (1)), blocking resistance and scratch resistance of the cured film further improve.

A possible reason for this is that the structural unit (preferably, the unit (1)) included in the amine A makes the skeleton of the amine A itself strong, resulting in an increase in the strength of the whole cured film.

### Structural Unit Represented by Formula (1)

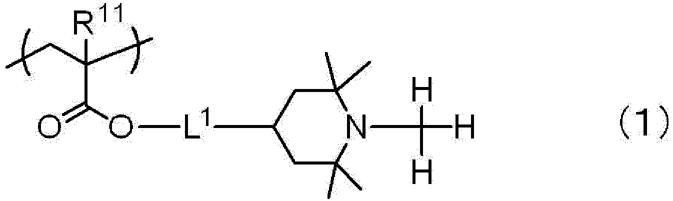

In formula (1), R¹¹ represents a hydrogen atom or a methyl group, and L¹ represents a single bond or a divalent linking group having 1 to 12 carbon atoms.

In formula (1), the number of carbon atoms of the divalent linking group having 1 to 12 carbon atoms and represented by L¹ is preferably 1 to 6, and more preferably 1 to 3.

The divalent linking group having 1 to 12 carbon atoms and represented by L¹ is preferably an alkylene group having 1 to 3 carbon atoms or a group represented by any one of formulae (L11) to (L14) below.

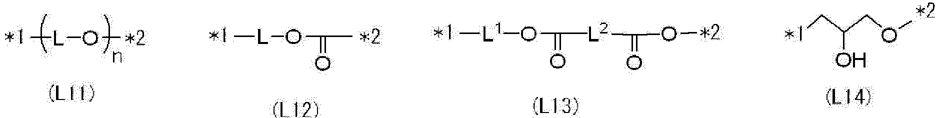

In formula (L11), L represents an alkylene group having 1 to 3 carbon atoms, n represents an integer of 1 to 4, *1 represents a site bound to the oxygen atom in formula (1), and *2 represents a site bound to the carbon atom in formula (1).

In formula (L12), L represents an alkylene group having 1 to 3 carbon atoms, *1 represents a site bound to the oxygen atom in formula (1), and *2 represents a site bound to the carbon atom in formula (1).

In formula (L13), L¹ and L² each independently represent an alkylene group having 1 to 3 carbon atoms, *1 represents a site bound to the oxygen atom in formula (1), and *2 represents a site bound to the carbon atom in formula (1).

In formula (L14), *1 represents a site bound to the oxygen atom in formula (1), and *2 represents a site bound to the carbon atom in formula (1).

In formula (L11), n is preferably an integer of 1 to 3, more preferably 1 or 2, and particularly preferably 1.

L¹ in formula (1) is preferably a single bond, an alkylene group having 1 to 3 carbon atoms, the group represented by formula (L12), or the group represented by formula (L13), and particularly preferably a single bond.

Specific examples of the unit (1) are shown below; however, the unit (1) is not limited to the specific examples below.

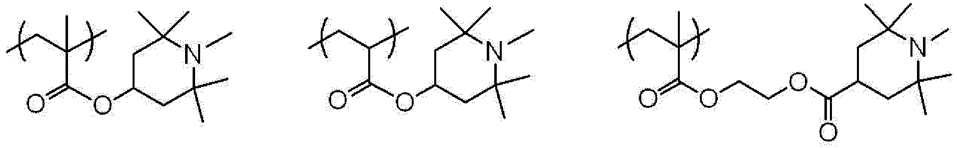

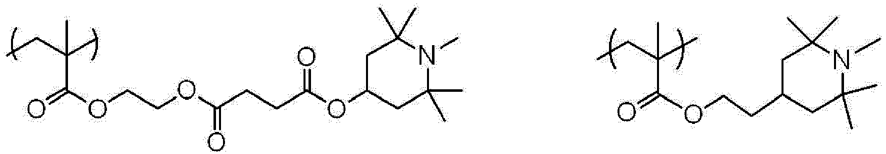

When the amine A includes the unit (1), the amine A may include a structural unit other than the unit (1) or may not include the other structural unit. The other structural unit that can be included in the amine A is preferably a structural unit derived from a vinyl monomer.

When the amine A includes the unit (1), the content of the unit (1) in the amine A is preferably 30% by mass, more preferably 50% by mass or more, still more preferably 60% by mass or more, and still more preferably 80% by mass or more based on the total amount of the amine A.

The upper limit of the content of the unit (1) in the amine A is not particularly limited, and the upper limit may be 100% by mass.

Regarding the amine A including the unit (1), specific resins described in WO2017/033984A can be referred to if necessary.

Regarding the other structural unit that can be included in the amine A, for example, structural units described in paragraphs 0078 to 0127 of WO2017/033984A can be referred to.

The other structural unit may be a structural unit derived from a vinyl monomer. More specifically, examples thereof include a unit (2) below, a unit (3) below, and a structural unit derived from methyl (meth)acrylate.

Only one structural unit or two or more structural units may be included as the other structural unit.

### Unit (2)

The unit (2) is a structural unit represented by formula (2) below.

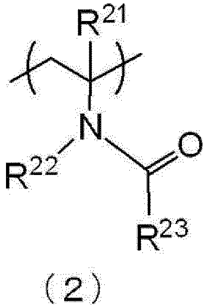

**In** formula (2), R²¹ represents a hydrogen atom or a methyl group, R²² and R²³ each independently represent a hydrogen atom or a hydrocarbon group. R²² and R²³ may be bound to each other to form a ring.

In R²² and R²³, the number of carbon atoms of the hydrocarbon group is preferably 1 to 6, and more preferably 1 to 3.

In formula (2), from the viewpoint of hardness of the resulting film, R²² and R²³ are each preferably independently a hydrocarbon group, or R²² and R²³ are preferably bound to each other to form (that is, R²² and R²³ preferably together form) a ring.

When R²² and R²³ are bound to each other to form a ring, the group formed by R²² and R²³ together is particular preferably a group represented by formula (N21) or formula (N22).

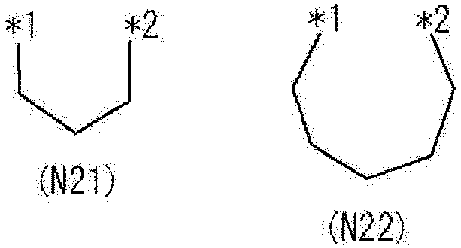

In formula (N21) or (N22), *1 represents a site bound to the nitrogen atom, and *2 represents a site bound to the carbon atom.

Preferred embodiments of formula (2) are those in which R²² and R²³ each independently represent a hydrogen atom or an alkyl group having 1 to 6 carbon atoms, or R²² and R²³ are bound to each other to represent (that is, R²² and R²³ together represent) a group represented by formula (N21) or (N22).

From the viewpoint of hardness of the cured film, among these embodiments, more preferred embodiments are those in which R²² and R²³ each independently represent an alkyl group having 1 to 6 carbon atoms, or R²² and R²³ are bound to each other to represent a group represented by formula (N21) or (N22).

### Unit (3)

The unit (3) is a structural unit represented by formula (3) below.

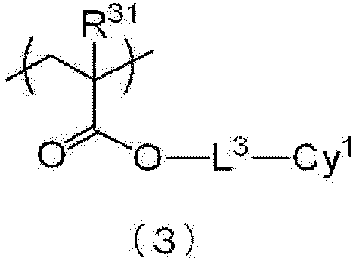

In the formula (3), R³¹ represents a hydrogen atom or a methyl group, L³ represents a single bond or a divalent linking group, and Cy¹ represents a hydrocarbon group including a ring structure that may include an oxygen atom.

In L³, the divalent linking group is preferably an alkylene group having 1 to 3 carbon atoms or a group represented by any one of formulae (L31) to (L34) below.

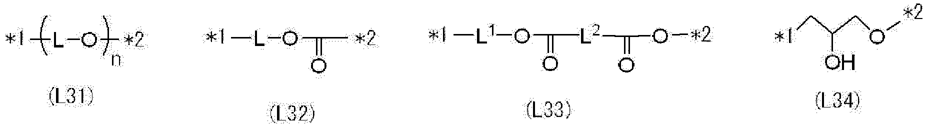

In formula (L31), L represents an alkylene group having 1 to 3 carbon atoms, n represents an integer of 1 to 4, *1 represents a site bound to the oxygen atom in formula (3), and *2 represents a site bound to Cy¹ in formula (3).

In formula (L32), L represents an alkylene group having 1 to 3 carbon atoms, *1 represents a site bound to the oxygen atom in formula (3), and *2 represents a site bound to Cy¹ in formula (3).

In formula (L33), L¹ and L² each independently represent an alkylene group having 1 to 3 carbon atoms, *1 represents a site bound to the oxygen atom in formula (3), and *2 represents a site bound to Cy¹ in formula (3).

In formula (L34), *1 represents a site bound to the oxygen atom in formula (3), and *2 represents a site bound to Cy¹ in formula (3).

In formula (L31), n is preferably an integer of 1 to 3, more preferably 1 or 2, and particularly preferably 1.

In Cy¹, the number of carbon atoms of the hydrocarbon group including a ring structure that may include an oxygen atom is preferably 3 to 20, more preferably 6 to 20, still more preferably 6 to 12, and particularly preferably 6 to 10.

Examples of the hydrocarbon group including a ring structure that may include an oxygen atom include substituted or unsubstituted aryl groups, substituted or unsubstituted alicyclic groups, substituted or unsubstituted cyclic acetal groups, substituted or unsubstituted cyclic ether groups, substituted or unsubstituted lactone groups, and substituted or unsubstituted heteroaryl groups that include an oxygen atom as a heteroatom. Examples of the substituents in the substituted aryl groups, the substituted alicyclic groups, the substituted cyclic acetal groups, the substituted cyclic ether groups, the substituted lactone groups, and the substituted heteroaryl groups include alkoxy groups, acyl groups, acyloxy groups, alkoxy carbonyl groups, a hydroxy group, and a carboxy group.

Examples of the hydrocarbon group including a ring structure that may include an oxygen atom include a phenyl group, a naphthyl group, a biphenyl group, a cyclohexyl group, alkylcyclohexyl groups, a norbornyl group, a dicyclopentanyl group, a dicyclopentenyl group, an adamantyl group, a furfuryl group, a hydrofurfuryl group, cyclic acetal groups, cyclic ether groups, and lactone groups.

Particularly preferred embodiments of formula (3) are those in which L³ represents a single bond, an alkylene group having 1 to 3 carbon atoms, or a group represented by any one of formulae (L31) to (L34), and Cy¹ represents a hydrocarbon group having 3 to 20 carbon atoms and including a ring structure that may include an oxygen atom.

From the viewpoint of blocking resistance of the film and adhesiveness between the film and a substrate, Cy¹ preferably includes, as the ring structure, a polycyclic structure and more preferably includes a polycyclic alicyclic structure.

Specific examples of the amine A include compounds (P-1, P-6, P-7, T622, LA-72, and LA-63P) in Examples described below.

Specific examples of the amine A include compounds below besides the above compounds.

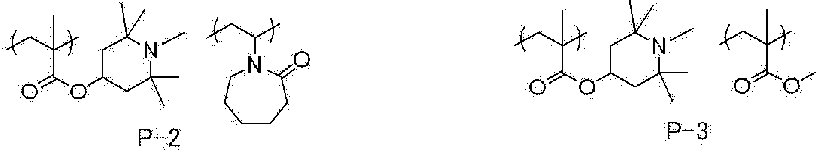

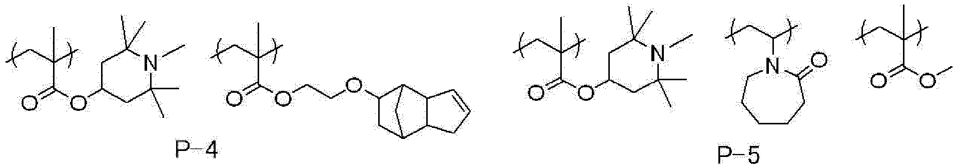

The amine A may be S-64 below or S-119 below.

S-64 below is "Stab UV 64" manufactured by Sabo SrL (Italy), where the average of n is about 5.2 to 6.3, and the Mn is 1,440 to 1,760.

S-119 below is "Stab UV 119" manufactured by Sabo SrL (Italy), where the Mn is 2,285.

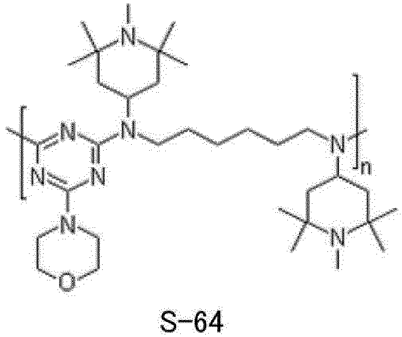

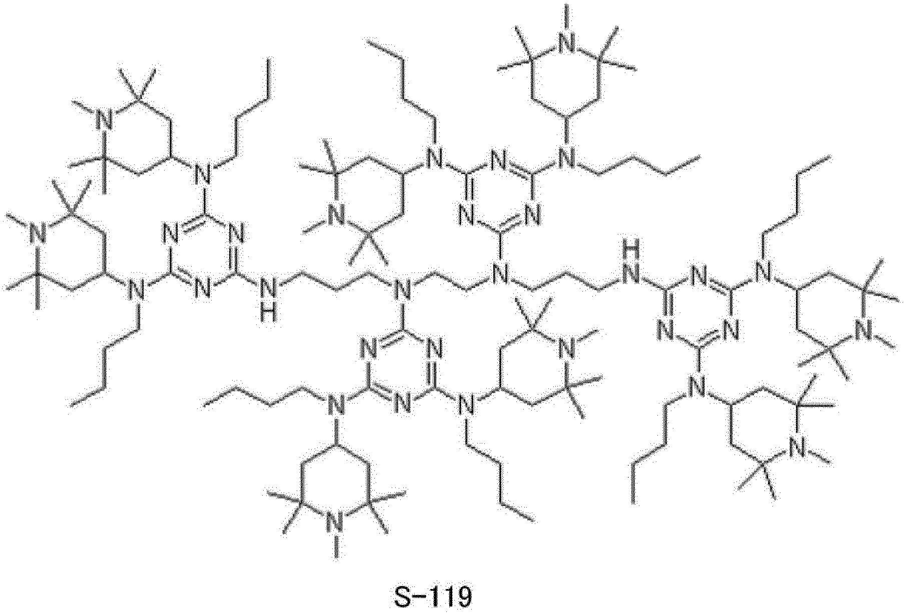

The content of the amine A in the ink according to the present disclosure is not particularly limited, but is preferably from 0.3% by mass to 10% by mass, more preferably from 0.6% by mass to 8.1% by mass, still more preferably from 1.0% by mass to 5.0% by mass, and still more preferably from 1.2% by mass to 4.5% by mass based on the total amount of the ink.

When the content of the amine A in the ink according to the present disclosure is 0.3% by mass or more, glossiness, blocking resistance, and scratch resistance of the cured film further improve.

When the content of the amine A in the ink according to the present disclosure is 10% by mass or less, storage stability of the ink further improves. In this case, when the ink is used as an ink jet ink, ejection stability of the ink also further improves.

### Amine B

The ink according to the present disclosure contains an amine B.

The amine B is a tertiary amine compound that has an α-hydrogen atom, that has no hindered amine structure, and that has no radical-polymerizable group.

The amine B preferably has an N,N-dimethylamino group.

When the amine B has an N,N-dimethylamino group, glossiness of the cured film further improves. The reason for this is probably that since an N,N-dimethylamino group includes six α-hydrogen atoms, the amine B more effectively exhibits its function (the function of reinforcing the curability near the surface of the ink film by cooperating with the sensitizer (D)) when the amine B has an N,N-dimethylamino group.

The amine B more preferably has an N,N-dimethylaniline structure.

In this case, in addition to glossiness of the cured film, blocking resistance, scratch resistance, and adhesiveness of the cured film further improve.

The reason for this is probably that when the amine B has an N,N-dimethylaniline structure, α-hydrogen atoms in the amine B are more easily abstracted, and reactivity of the generated radicals further improves.

The amine B still more preferably has a compound represented by formula (b1) below (hereinafter, also referred to as a "b1 compound").

In this case, glossiness of the cured film further improves.

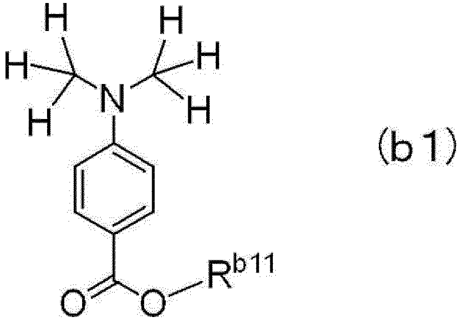

In formula (b1), R^{b11} represents an alkyl group or an alkoxyalkyl group.

As shown by the chemical formula above, the structure of the b1 compound is a structure in which an alkoxycarbonyl group or an alkoxyalkyl carbonyl group is bound to the benzene ring in N,N-dimethylaniline.

The six "H" that are clearly shown in formula (b1) are each an α-hydrogen atom.

When the amine B is the b1 compound, in addition to the above-described effect of the N,N-dimethylaniline structure, the effect of further improving glossiness of the cured film is obtained.

The reason why this effect is achieved is probably as follows.

In the b1 compound, it is presumed that electrons surrounding the nitrogen atom are strongly withdrawn by the structure in which the benzene ring and the alkoxycarbonyl group or the alkoxyalkyl carbonyl group are bound to each other. Accordingly, when the ink film is irradiated with light, the α-hydrogen atoms in the b1 compound are probably more easily abstracted by the excited sensitizer (D). Probably, as a result, when the amine B is the b1 compound, the effect of reinforcing curability near the surface of the ink film is more effectively obtained, and consequently, glossiness of the cured film further improves.

The number of carbon atoms of R^{b11} is not particularly limited, but is preferably 1 to 20, more preferably 1 to 12, still more preferably 1 to 10, and still more preferably 1 to 8.

The number-average molecular weight (Mn) of the amine B is not particularly limited; however, the Mn of the amine B is preferably less than 1,000.

In this case, the above-described function of the amine B (that is, the function of reinforcing the curability near the surface of the ink film) further improves, and the effect of improving glossiness of the cured film further improves.

The lower limit of the Mn of the amine B is not particularly limited, but the lower limit is, for example, 100. That is, the Mn of the amine B is, for example, 100 or more and less than 1,000.

From the viewpoint of further improving glossiness of the cured film, the lower limit of the Mn of the amine B is preferably 155, more preferably 200, still more preferably 300, and still more preferably 500.

Specific examples of the amine B include, but are not limited to, compounds below.

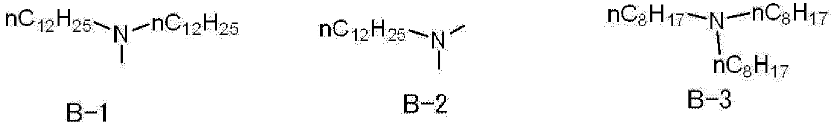

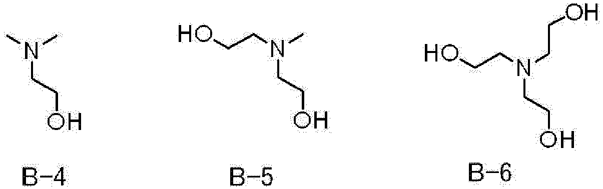

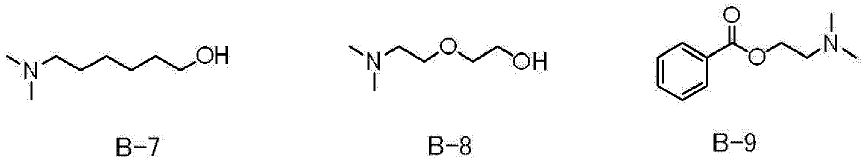

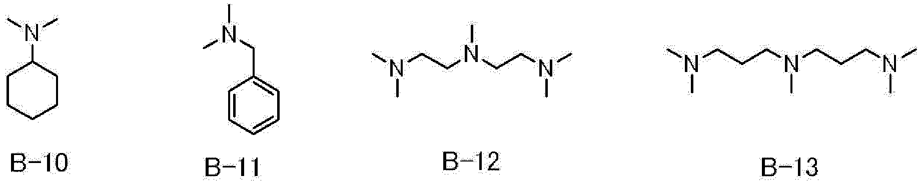

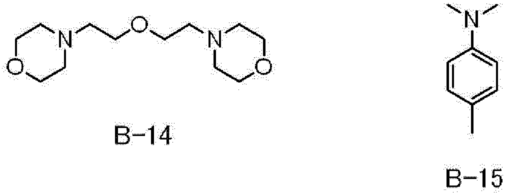

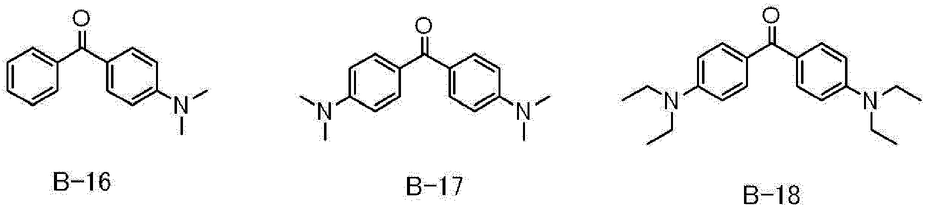

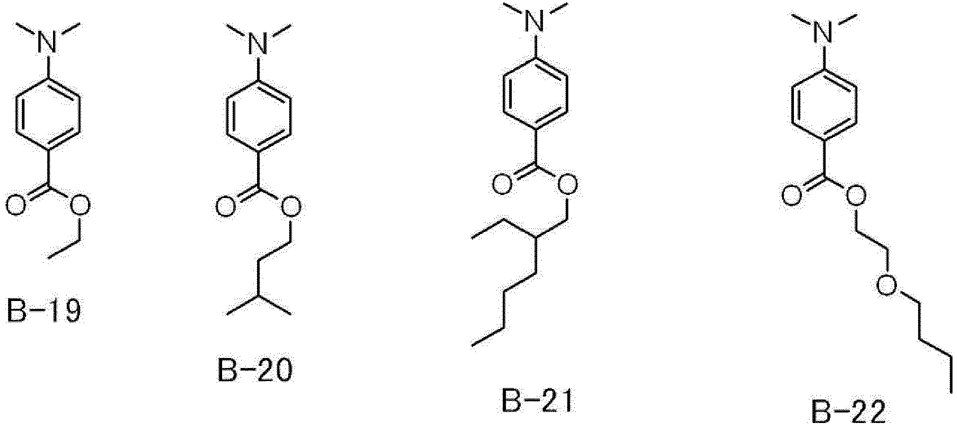

The content of the amine B in the ink according to the present disclosure is not particularly limited, but is preferably from 0.3% by mass to 6.0% by mass, more preferably from 0.4% by mass to 5.4% by mass, still more preferably from 1.0% by mass to 5.0% by mass, and still more preferably from 1.2% by mass to 4.0% by mass based on the total amount of the ink.

When the content of the amine B in the ink according to the present disclosure is 0.3% by mass or more, glossiness of the cured film further improves.

When the content of the amine B in the ink according to the present disclosure is 6.0% by mass or less, blocking resistance and scratch resistance of the cured film further improve.

In the ink according to the present disclosure, a mass ratio of the content of the amine B to the content of the amine A (hereinafter, also referred to as a "content mass ratio [B/A]") is from 0.30 to 1.00, and preferably from 0.35 to 1.00.

When the content mass ratio [B/A] is 0.30 or more, glossiness of the cured film further improves.

When the content mass ratio [B/A] is 1.00 or less, glossiness, blocking resistance, and scratch resistance of the cured film further improve.

### At Least One of Monofunctional Radical-Polymerizable Monomer or Bifunctional Radical-Polymerizable Monomer

The ink according to the present disclosure contains at least one of a monofunctional radical-polymerizable monomer or a bifunctional radical-polymerizable monomer (hereinafter, also referred to as a "specific monomer").

The ink according to the present disclosure may be an embodiment in which both at least one monofunctional radical-polymerizable monomer and at least one bifunctional radical-polymerizable monomer are contained as the specific monomer, an embodiment in which at least one monofunctional radical-polymerizable monomer is contained as the specific monomer and no bifunctional radical-polymerizable monomer is contained, or an embodiment in which at least one bifunctional radical-polymerizable monomer is contained as the specific monomer and no monofunctional radical-polymerizable monomer is contained.

Examples of the monofunctional radical-polymerizable monomer (hereinafter, also referred to as a "monofunctional monomer") serving as the specific monomer include N-vinyl compounds such as N-vinylcaprolactam and N-vinylpyrrolidone; monofunctional acrylate compounds such as 2-phenoxyethyl acrylate (PEA), benzyl acrylate, cyclic trimethylolpropane formal acrylate (CTFA), isobornyl acrylate (IBOA), tetrahydrofurfuryl acrylate, 2-(2-ethoxyethoxy)ethyl acrylate, octyl acrylate, decyl acrylate, tridecyl acrylate, isodecyl acrylate, lauryl acrylate, 3,3,5-trimethylcyclohexyl acrylate, dicyclopentenyl acrylate, 4-tert-butylcyclohexyl acrylate, cyclohexyl acrylate, caprolactone-modified acrylate, hydroxyethyl acrylate, hydroxybutyl acrylate, polyethylene glycol acrylate, polypropylene glycol acrylate, nonylphenoxypolyethylene glycol acrylate, and nonylphenoxypolypropylene glycol acrylate; monofunctional methacrylate compounds such as 2-phenoxyethyl methacrylate, benzyl methacrylate, isobornyl methacrylate, tetrahydrofurfuryl methacrylate, 2-(2-ethoxyethoxy)ethyl methacrylate, octyl methacrylate, decyl methacrylate, tridecyl methacrylate, isodecyl methacrylate, lauryl methacrylate, 3,3,5-trimethylcyclohexyl methacrylate, dicyclopentenyl methacrylate, 4-tert-butylcyclohexyl methacrylate, cyclohexyl methacrylate, caprolactone-modified methacrylate, hydroxyethyl methacrylate, hydroxybutyl methacrylate, polyethylene glycol methacrylate, polypropylene glycol methacrylate, nonylphenoxypolyethylene glycol methacrylate, and nonylphenoxypolypropylene glycol methacrylate; monofunctional vinyl ether compounds such as n-propyl vinyl ether, isopropyl vinyl ether, n-butyl vinyl ether, isobutyl vinyl ether, 2-ethylhexyl vinyl ether, cyclohexyl vinyl ether, 2-hydroxyethyl vinyl ether, 4-hydroxybutyl vinyl ether, and cyclohexane dimethanol monovinyl ether; monofunctional acrylamide compounds such as acrylamide, N,N-dimethylacrylamide, N,N-diethylacrylamide, acryloylmorpholine (ACMO), N-isopropylacrylamide, N-hydroxyethylacrylamide, N-butylacrylamide, N-tert-butylacrylamide, N-(1,1-dimethyl-3-oxobutyl)acrylamide, N-dodecylacrylamide, and N-(butoxymethyl)acrylamide; and monofunctional methacrylamide compounds such as methacrylamide, N-phenylmethacrylamide, N-(methoxymethyl)methacrylamide, N,N-dimethylmethacrylamide, and N-tert-butylmethacrylamide.

Examples of the bifunctional radical-polymerizable monomer (hereinafter also referred to as a "bifunctional monomer") serving as the specific monomer include bifunctional acrylate compounds such as hexanediol diacrylate, dipropylene glycol diacrylate, 3-methyl-1,5-pentanediol diacrylate, polyethylene glycol diacrylate, polypropylene glycol diacrylate, nonanediol diacrylate, decanediol diacrylate, neopentyl glycol diacrylate, polyethylene glycol-modified bisphenol A diacrylate, dioxane glycol diacrylate, cyclohexane dimethanol diacrylate, and tricyclodecane dimethanol diacrylate; 2-(2-vinyloxyethoxy)ethyl acrylate (VEEA); bifunctional vinyl compounds such as 1,4-butanediol divinyl ether, cyclohexanedimethanol divinyl ether, diethylene glycol divinyl ether, and triethylene glycol divinyl ether (DVE3); and bifunctional methacrylate compounds such as hexanediol dimethacrylate, dipropylene glycol dimethacrylate, polyethylene glycol dimethacrylate, polypropylene glycol dimethacrylate, neopentyl glycol dimethacrylate, and polyethylene glycol-modified bisphenol A dimethacrylate.

Besides the monofunctional radical-polymerizable monomers and the bifunctional radical-polymerizable monomers mentioned above, commercially available products described in, for example, "Crosslinking Agent Handbook", (1981, Taiseisha Ltd.) edited by Shinzo Yamashita; "UV/EB Curing Handbook (Raw Material Edition)" (1985, Kobunshi Kankokai) edited by Kiyoshi Kato; "Application and Market of UV/EB Curing Technology", p. 79, (1989, CMC Publishing Co., Ltd.) edited by RadTech Japan; and "Polyester Resin Handbook", (1988, Nikkan Kogyo Shimbun, Ltd.) written by Eiichiro Takiyama, and monofunctional or bifunctional radical-polymerizable monomers that are publicly known in the art can also be used as the specific monomer.

The weight-average molecular weight (Mw) of the specific monomer is preferably 100 or more and less than 1,000, more preferably 100 or more and 800 or less, and still more preferably 150 or more and 700 or less.

The ink according to the present disclosure may contain a monomer other than the specific monomer (for example, a tri- or higher functional radical-polymerizable monomer).

Examples of the tri- or higher functional radical-polymerizable monomer serving as the other monomer include tri- or higher functional (meth)acrylate compounds such as pentaerythritol triacrylate, pentaerythritol tetraacrylate, dipentaerythritol pentaacrylate, dipentaerythritol hexaacrylate (DPHA), trimethylolpropane triacrylate, ditrimethylolpropane tetraacrylate, pentaerythritol trimethacrylate, and pentaerythritol tetramethacrylate.

The total content of the specific monomer in the ink according to the present disclosure is 50% by mass or more based on the total amount of the ink.

A total content of the specific monomer of 50% by mass or more means that the ink is an ink that contains the specific monomer as a main liquid component.

The total content of the specific monomer in the ink according to the present disclosure is more preferably 60% by mass or more, and still more preferably 65% by mass or more based on the total amount of the ink.

The upper limit of the total content of the specific monomer is not particularly limited, but the upper limit can be, for example, 95% by mass or 90% by mass based on the total amount of the ink.

When the ink according to the present disclosure is used as an ink jet ink, from the viewpoint of further improving ejection stability of the ink, a ratio of the specific monomer to the total amount of the radical-polymerizable monomer contained is preferably 60% by mass or more, and more preferably 80% by mass or more.

The ratio of the specific monomer to the total amount of the radical-polymerizable monomer contained may be 100% by mass.

From the viewpoint of further improving the hardness of an image, the specific monomer preferably includes a bifunctional monomer. From the viewpoint of further improving the hardness of an image, the bifunctional monomer preferably accounts for 10% by mass or more, and more preferably 30% by mass or more of the specific monomer.

### Sensitizer (D)

The ink according to the present disclosure contains a sensitizer (D).

The sensitizer (D) is at least one of a compound represented by formula (D1) below or a compound represented by formula (D2) below.

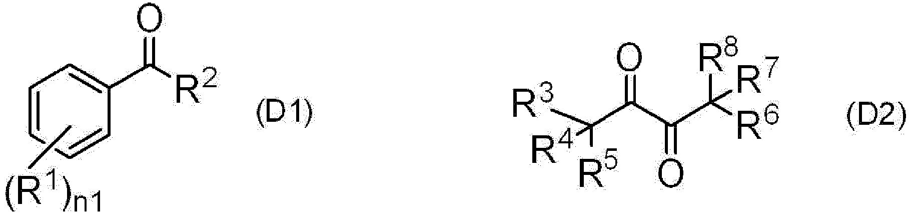

In formula (D1), R¹ represents a halogen atom, an alkyl group, an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, or a sulfo group; and R² represents an alkyl group or an aryl group; and n1 represents an integer of 0 to 5.

When n1 is an integer of 1 to 5, R² and at least one of R¹ may be bound together to form a ring.

When n1 is an integer of 2 to 5, the plurality of R¹ may be the same or different.

In formula (D2), R³ to R⁸ each independently represent a hydrogen atom, a halogen atom, an alkyl group, or an aryl group.

As described above, the sensitizer (D) is excited when an ink film is irradiated with light, and the sensitizer (D) has a function of abstracting an α-hydrogen atom of the amine B in the excited state.

In formula (D1), R¹ represents a halogen atom, an alkyl group, an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, or a sulfo group.

In formula (D1), the halogen atom represented by R¹ is preferably a fluorine atom, a chlorine atom, a bromine atom, or an iodine atom, more preferably a fluorine atom, a chlorine atom, or a bromine atom, and still more preferably a fluorine atom or a chlorine atom.

In formula (D1), the alkyl group represented by R¹ may be a linear alkyl group, a branched alkyl group, or a cyclic alkyl group.

In formula (D1), the alkyl group represented by R¹ may have a substituent.

Examples of the substituent which the alkyl group represented by R¹ in formula (D1) may have include a halogen atom (preferably a fluorine atom, a chlorine atom, a bromine atom, or an iodine atom, more preferably a fluorine atom, a chlorine atom, or a bromine atom, and still more preferably a fluorine atom or a chlorine atom), an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, and a sulfo group.

In formula (D1), the number of carbon atoms of the alkyl group represented by R¹ is preferably 1 to 8, more preferably 1 to 4, still more preferably 1 to 3, and particularly preferably 1 or 2.

Herein, the number of carbon atoms of the alkyl group represented by R¹ means a total number of carbon atoms (that is, a total number of carbon atoms including the number of carbon atoms of a substituent when the alkyl group has the substituent).

In formula (D1), the aryl group represented by R¹ may have a substituent.

Examples of the substituent which the aryl group represented by R¹ in formula (D1) may have include a halogen atom (preferably a fluorine atom, a chlorine atom, a bromine atom, or an iodine atom, more preferably a fluorine atom, a chlorine atom, or a bromine atom, and still more preferably a fluorine atom or a chlorine atom), an alkyl group, an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, and a sulfo group.

In formula (D1), the number of carbon atoms of the aryl group represented by R¹ is preferably 6 to 10 and more preferably 6 to 8.

Herein, the number of carbon atoms of the aryl group represented by R¹ means a total number of carbon atoms (that is, a total number of carbon atoms including the number of carbon atoms of a substituent when the aryl group has the substituent).

In formula (D1), the aryl group represented by R¹ is preferably a substituted or unsubstituted phenyl group.

In formula (D1), the alkylsulfanyl group represented by R¹ may be a linear alkylsulfanyl group, a branched alkylsulfanyl group, or a cyclic alkylsulfanyl group.

In formula (D1), the alkylsulfanyl group represented by R¹ may have a substituent.

Examples of the substituent which the alkylsulfanyl group represented by R¹ in formula (D1) may have include a halogen atom (preferably a fluorine atom, a chlorine atom, a bromine atom, or an iodine atom, more preferably a fluorine atom, a chlorine atom, or a bromine atom, and still more preferably a fluorine atom or a chlorine atom), an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, and a sulfo group.

In formula (D1), the number of carbon atoms of the alkylsulfanyl group represented by R¹ is preferably 1 to 8, more preferably 1 to 4, still more preferably 1 to 3, and particularly preferably 1 or 2.

Herein, the number of carbon atoms of the alkylsulfanyl group represented by R¹ means a total number of carbon atoms (that is, a total number of carbon atoms including the number of carbon atoms of a substituent when the alkylsulfanyl group has the substituent).

In formula (D1), the alkylamino group represented by R¹ may be a monoalkylamino group or a dialkylamino group.

In formula (D1), the alkyl group included in the structure of the alkylamino group represented by R¹ may be a linear alkyl group, a branched alkyl group, or a cyclic alkyl group.

In formula (D1), the alkylamino group represented by R¹ may have a substituent.

Examples of the substituent which the alkylamino group represented by R¹ in formula (D1) may have include a halogen atom (preferably a fluorine atom, a chlorine atom, a bromine atom, or an iodine atom, more preferably a fluorine atom, a chlorine atom, or a bromine atom, and still more preferably a fluorine atom or a chlorine atom), an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, and a sulfo group.

In formula (D1), the number of carbon atoms of the alkylamino group represented by R¹ is preferably 1 to 16, more preferably 1 to 8, still more preferably 1 to 6, and particularly preferably 1 to 4.

Herein, the number of carbon atoms of the alkylamino group represented by R¹ means a total number of carbon atoms (that is, a total number of carbon atoms including the number of carbon atoms of a substituent when the alkylamino group has the substituent).

In formula (D1), the alkoxy group represented by R¹ may be a linear alkoxy group, a branched alkoxy group, or a cyclic alkoxy group.

In formula (D1), the alkoxy group represented by R¹ may have a substituent.

Examples of the substituent which the alkoxy group represented by R¹ in formula (D1) may have include a halogen atom (preferably a fluorine atom, a chlorine atom, a bromine atom, or an iodine atom, more preferably a fluorine atom, a chlorine atom, or a bromine atom, and still more preferably a fluorine atom or a chlorine atom), an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, and a sulfo group.

In formula (D1), the number of carbon atoms of the alkoxy group represented by R¹ is preferably 1 to 8, more preferably 1 to 4, still more preferably 1 to 3, and particularly preferably 1 or 2.

Herein, the number of carbon atoms of the alkoxy group represented by R¹ means a total number of carbon atoms (that is, a total number of carbon atoms including the number of carbon atoms of a substituent when the alkoxy group has the substituent).

In formula (D1), the alkoxycarbonyl group represented by R¹ may be a linear alkoxycarbonyl group, a branched alkoxycarbonyl group, or a cyclic alkoxycarbonyl group.

In formula (D1), the alkoxycarbonyl group represented by R¹ may have a substituent.

Examples of the substituent which the alkoxycarbonyl group represented by R¹ in formula (D1) may have include a halogen atom (preferably a fluorine atom, a chlorine atom, a bromine atom, or an iodine atom, more preferably a fluorine atom, a chlorine atom, or a bromine atom, and still more preferably a fluorine atom or a chlorine atom), an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, and a sulfo group.

In formula (D1), the number of carbon atoms of the alkoxycarbonyl group represented by R¹ is preferably 1 to 9, more preferably 1 to 5, still more preferably 1 to 4, and particularly preferably 1 to 3.

Herein, the number of carbon atoms of the alkoxycarbonyl group represented by R¹ means a total number of carbon atoms (that is, a total number of carbon atoms including the number of carbon atoms of a substituent when the alkoxycarbonyl group has the substituent).

In formula (D1), the acyloxy group represented by R¹ may have a substituent.

Examples of the substituent which the acyloxy group represented by R¹ in formula (D1) may have include a halogen atom (preferably a fluorine atom, a chlorine atom, a bromine atom, or an iodine atom, more preferably a fluorine atom, a chlorine atom, or a bromine atom, and still more preferably a fluorine atom or a chlorine atom), an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, and a sulfo group.

In formula (D1), the number of carbon atoms of the acyloxy group represented by R¹ is preferably 1 to 9, more preferably 1 to 5, still more preferably 1 to 4, and particularly preferably 1 to 3.

Herein, the number of carbon atoms of the acyloxy group represented by R¹ means a total number of carbon atoms (that is, a total number of carbon atoms including the number of carbon atoms of a substituent when the acyloxy group has the substituent).

In formula (D1), the acyl group represented by R¹ may have a substituent.

Examples of the substituent which the acyl group represented by R¹ in formula (D1) may have include a halogen atom (preferably a fluorine atom, a chlorine atom, a bromine atom, or an iodine atom, more preferably a fluorine atom, a chlorine atom, or a bromine atom, and still more preferably a fluorine atom or a chlorine atom), an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, and a sulfo group.

In formula (D1), preferred numbers of carbon atoms of the acyl group represented by R¹ are the same as the above-described preferred numbers of carbon atoms of the acyloxy group represented by R¹.

R¹ in formula (D1) is preferably a halogen atom, an alkyl group having 1 to 8 (more preferably 1 to 4) carbon atoms, or a hydroxy group.

In formula (D1), n1 represents an integer of 0 to 5.

Preferably, n1 is an integer of 0 to 2, and more preferably 0 or 1.

When n1 is an integer of 1 to 5, R² and at least one of R¹ may be bound together to form a ring.

When n1 is an integer of 2 to 5, the plurality of R¹ may be the same or different.

In formula (D1), R² represents an alkyl group or an aryl group.

The alkyl group represented by R² has the same definition as in the alkyl group represented by R¹, and preferred embodiments of the alkyl group represented by R² are also the same as those of the alkyl group represented by R¹.

The aryl group represented by R² has the same definition as in the aryl group represented by R¹, and preferred embodiments of the aryl group represented by R² are also the same as those of the aryl group represented by R¹.

In formula (D2), R³ to R⁸ each independently represent a hydrogen atom, a halogen atom, an alkyl group, or an aryl group.

The halogen atom represented by R³ to R⁸, the alkyl group represented by R³ to R⁸, and the aryl group represented by R³ to R⁸ respectively have the same definitions as the halogen atom represented by R¹, the alkyl group represented by R¹, and the aryl group represented by R¹ in formula (D1).

In formula (D2), at least two of R³ to R⁸ may be bound together to form at least one ring.

The sensitizer may also be a compound represented by formula (D1a) below, a compound represented by formula (D1b) below, a compound represented by formula (D1c) below, and a compound represented by formula (D1d) below.

The compound represented by formula (D2) is preferably a compound represented by formula (D2a) below.

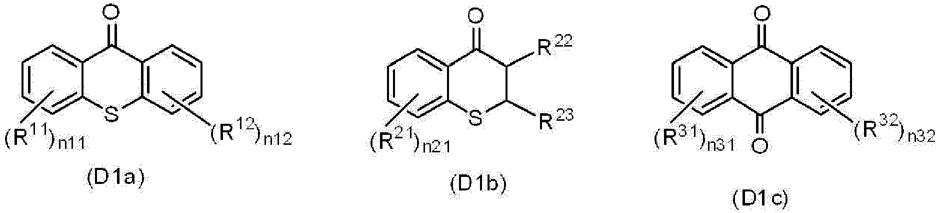

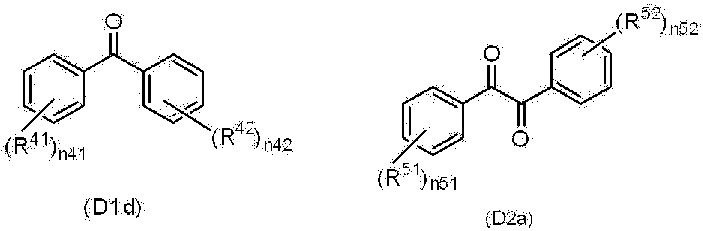

In formula (D1a), R¹¹ has the same definition as in R¹ in formula (D1), and preferred embodiments of R¹¹ are also the same as those of R¹ in formula (D1).

In formula (D1a), n11 represents an integer of 0 to 4.

When n11 is an integer of 2 to 4, the plurality of R¹¹ may be the same or different.

In formula (D1a), n11 is preferably an integer of 0 to 2, and more preferably 0 or 1.

In formula (D1a), R¹² and n12 have the same definitions as in R¹¹ and n11 in formula (D1a), respectively, and preferred embodiments of R¹² and n12 are also the same as those of R¹¹ and n11 in formula (D1a), respectively.

In formula (D1b), R²¹ and n21 have the same definitions as in R¹¹ and n11 in formula (D1a), respectively, and preferred embodiments of R²¹ and n21 are also the same as those of R¹¹ and n11 in formula (D1a), respectively.

In formula (D1b), R²² and R²³ each independently represent a hydrogen atom, a halogen atom, an alkyl group, an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, or a sulfo group. In formula (D1b), R²² and R²³ each have the same definition as in R¹¹ in formula (D1a) except that R²² and R²³ each may be a hydrogen atom. In formula (D1b), preferred embodiments of each of R²² and R²³ are the same as those of R¹¹ in formula (D1a) except that R²² and R²³ each may be a hydrogen atom. In formula (D1b), R²² and R²³ are each preferably independently a hydrogen atom, a halogen atom, an alkyl group having 1 to 8 (more preferably 1 to 4) carbon atoms, or a hydroxy group.

In formula (D1c), R³¹ and n31 have the same definitions as in R¹¹ and n11 in formula (D1a), respectively, and preferred embodiments of R³¹ and n31 are also the same as those of R¹¹ and n11 in formula (D1a), respectively.

In formula (D1c), R³² and n32 have the same definitions as in R¹¹ and n11 in formula (D1a), respectively, and preferred embodiments of R³² and n32 are also the same as those of R¹¹ and n11 in formula (D1a), respectively.

In formula (D1d), R⁴¹ and n41 have the same definitions as in R¹ and n1 in formula (D1), respectively, and preferred embodiments of R⁴¹ and n41 are also the same as those of R¹ and n1 in formula (D1), respectively.

In formula (D1d), R¹² and n42 have the same definitions as in R¹ and n1 in formula (D1), respectively, and preferred embodiments of R⁴² and n42 are also the same as those of R¹ and n1 in formula (D1), respectively.

In formula (D2a), R⁵¹ and n51 have the same definitions as in R¹ and n1 in formula (D1), respectively, and preferred embodiments of R⁵¹ and n51 are also the same as those of R¹ and n1 in formula (D1), respectively.

In formula (D2a), R⁵² and n52 have the same definitions as in R¹ and n1 in formula (D1), respectively, and preferred embodiments of R⁵² and n52 are also the same as those of R¹ and n1 in formula (D1), respectively.

The sensitizer (D) preferably includes a compound represented by formula (D1); more preferably includes at least one selected from the group consisting of a compound represented by formula (D1a), a compound represented by formula (D1b), a compound represented by formula (D1c), and a compound represented by formula (D1d); still more preferably includes at least one selected from the group consisting of a compound represented by formula (D1a), a compound represented by formula (D1b), and a compound represented by formula (D1c); still more preferably includes at least one selected from the group consisting of a compound represented by formula (D1a) and a compound represented by formula (D1b); and particularly preferably includes a compound represented by formula (D1a).

The preferred compound described above (for example, a compound represented by formula (D1)) preferably accounts for 50% by mass or more, and more preferably 80% by mass or more of the sensitizer (D).

Specific examples of the compound represented by formula (D1) and the compound represented by formula (D2) are shown below; however, the compounds represented by formula (D1) or (D2) are not limited to the specific examples below.

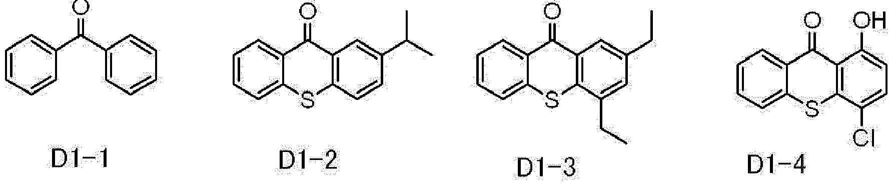

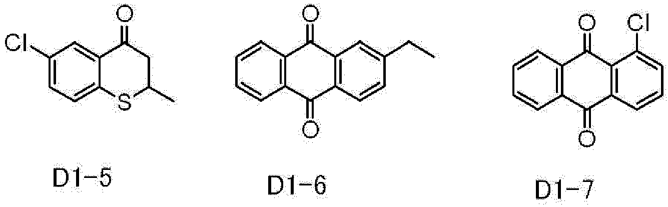

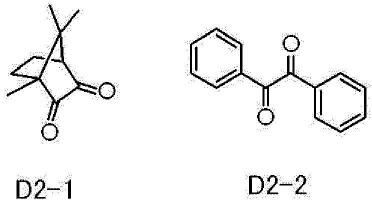

The content of the sensitizer (D) in the ink according to the present disclosure is preferably from 0.1% by mass to 10% by mass, more preferably from 0.25% by mass to 6.0% by mass, still more preferably from 0.5% by mass to 5.0% by mass, and still more preferably from 0.6% by mass % to 4.0% by mass based on the total amount of the ink.

In the ink according to the present disclosure, a mass ratio of the content of the amine B to the content of the sensitizer (D) (hereinafter, also referred to as a "content mass ratio [B/D]") is preferably from 0.33 to 8.00, more preferably from 0.50 to 4.00, and still more preferably from 0.50 to 3.33.

When the content mass ratio [B/D] is 0.33 or more, blocking resistance and scratch resistance of the cured film further improve.

When the content mass ratio [B/D] is 8.00 or less, glossiness of the cured film further improves.

### Photopolymerization Initiator

The ink according to the present disclosure preferably contains a photopolymerization initiator.

In this case, the photopolymerization initiator contained in the ink according to the present disclosure may be one photopolymerization initiator or two or more photopolymerization initiators.

The photopolymerization initiator used may be a publicly known photopolymerization initiator that absorbs light (i.e., active energy rays) to generate radicals, which are polymerization-initiating species.

Preferred examples of the photopolymerization initiator include (a) carbonyl compounds such as aromatic ketones, (b) acylphosphine oxide compounds, (c) aromatic onium salt compounds, (d) organic peroxides, (e) thio compounds, (f) hexaarylbiimidazole compounds, (g) ketoxime ester compounds, (h) borate compounds, (i) azinium compounds, (j) metallocene compounds, (k) active ester compounds, (l) compounds having a carbon-halogen bond, and (m) alkylamine compounds.

As the photopolymerization initiator, the above compounds (a) to (m) may be used alone or in combination of two or more thereof.

Preferred examples of the (a) carbonyl compounds, the (b) acylphosphine oxide compounds, and the (e) thio compounds include compounds having a benzophenone skeleton or a thioxanthone skeleton, the compounds being described in "RADIATION CURING IN POLYMER SCIENCE AND TECHNOLOGY", J. P. FOUASSIER, J. F. RABEK (1993), pp. 77 to 117.

More preferred examples thereof include α-thiobenzophenone compounds described in JP1972-6416B (JP-S47-6416B), benzoin ether compounds described in JP1972-3981B (JP-S47-3981B), α-substituted benzoin compounds described in JP1972-22326B (JP-S47-22326B), benzoin derivatives described in JP1972-23664B (JP-S47-23664B), aroyl phosphonates described in JP1982-30704A (JP-S57-30704A), dialkoxy benzophenones described in JP1985-26483B (JP-S60-26483B), benzoin ethers described in JP1985-26403B (JP-S60-26403B) and JP1987-81345A (JP-S62-81345A), α-aminobenzophenones described in JP1989-34242B (JP-H01-34242B), US4318791A, and EP0284561A1, p-di(dimethylaminobenzoyl)benzene described in JP1990-211452A (JP-H02-211452A), thio-substituted aromatic ketones described in JP1986-194062A (JP-S61-194062A), acylphosphine sulfides described in JP1990-9597B (JP-H02-9597B), acylphosphines described in JP1990-9596B (JP-H02-9596B), thioxanthones described in JP1988-61950B (JP-S63-61950B), and coumarins described in JP1984-42864B (JP-S59-42864B).

Furthermore, the polymerization initiators described in JP2008-105379A and JP2009-114290A are also preferred.

Of these, from the viewpoint of glossiness, the ink according to the present disclosure more preferably includes, as the photopolymerization initiator, the (a) carbonyl compounds or the (b) acylphosphine oxide compounds. Specific examples thereof include bis(2,4,6-trimethylbenzoyl)phenylphosphine oxide (for example, IRGACURE (registered trademark) 819 manufactured by BASF), 2-(dimethylamino)-1-(4-morpholinophenyl)-2-benzyl-1-butanone (for example, IRGACURE (registered trademark) 369 manufactured by BASF), 2-methyl-1-(4-methylthiophenyl)-2-morpholinopropan-1-one (for example, IRGACURE (registered trademark) 907 manufactured by BASF), 1-hydroxycyclohexylphenylketone (for example, IRGACURE (registered trademark) 184 manufactured by BASF), and 2,4,6-trimethylbenzoyldiphenylphosphine oxide (for example, DAROCUR (registered trademark) TPO and LUCIRIN (registered trademark) TPO (both of which are manufactured by BASF).

Of these, from the viewpoints of, for example, improvement of sensitivity and suitability to LED light, the photopolymerization initiator is preferably an (b) acylphosphine oxide compound and more preferably a monoacylphosphine oxide compound (particularly preferably, 2,4,6-trimethylbenzoyldiphenylphosphine oxide) or a bisacylphosphine oxide compound (particularly preferably, bis(2,4,6-trimethylbenzoyl)phenylphosphine oxide).

When the ink according to the present disclosure contains a photopolymerization initiator, the content of the photopolymerization initiator is preferably 0.5% by mass to 15.0% by mass, more preferably 1.0% by mass to 12.0% by mass, and still more preferably 2.0% by mass to 10.0% by mass based on the total amount of the ink.

### Surfactant

The ink according to the present disclosure may contain a surfactant.

Examples of the surfactant include surfactants described in JP1987-173463A (JP-S62-173463A) and JP1987-183457A (JP-S62-183457A). Examples of the surfactant include anionic surfactants such as dialkyl sulfosuccinates, alkylnaphthalene sulfonates, and fatty acid salts; nonionic surfactants such as polyoxyethylene alkyl ethers, polyoxyethylene alkyl allyl ethers, acetylene glycol, polyoxyethylene-polyoxypropylene block copolymers, and siloxanes such as modified polydimethylsiloxane; cationic surfactants such as alkylamine salts and quaternary ammonium salts; and betaine surfactants such as carbobetaine and sulfobetaine.

Organofluorine compounds having no polymerizable groups may be used instead of the surfactants. The organofluorine compounds are preferably hydrophobic. The organofluorine compounds cover, for example, fluorine-containing surfactants, oily fluorine-containing compounds (e.g., fluorine oil), and solid fluorine compound resins (e.g., a tetrafluoroethylene resin). Examples thereof include the compounds described in JP1982-9053B (JP-S57-9053B) (the 8th column to the 17th column) and JP1987-135826A (JP-S62-135826A).

When the ink according to the present disclosure contains a surfactant, the content of the surfactant is preferably 0.01% by mass to 5.0% by mass, more preferably 0.1% by mass to 3.0% by mass, and particularly preferably 0.3% by mass to 2.0% by mass based on the total amount of the ink.

### Polymerization Inhibitor

The ink according to the present disclosure may contain a polymerization inhibitor.

Examples of the polymerization inhibitor include p-methoxyphenol, quinones (such as hydroquinone, benzoquinone, and methoxybenzoquinone), phenothiazine, catechols, alkylphenols (such as dibutylhydroxytoluene (BHT)), alkyl bisphenols, zinc dimethyldithiocarbamate, copper dimethyldithiocarbamate, copper dibutyldithiocarbamate, copper salicylate, thiodipropionates, mercaptobenzimidazole, phosphites, 2,2,6,6-tetramethylpiperidine-1-oxyl (TEMPO), 2,2,6,6-tetramethyl-4-hydroxypiperidine-1-oxyl (TEMPOL), and tris(N-nitroso-N-phenylhydroxylamine)aluminum salt (synonym: cupferron Al).

Of these, at least one selected from the group consisting of p-methoxyphenol, catechols, quinones, alkylphenols, TEMPO, TEMPOL, and tris(N-nitroso-N-phenylhydroxylamine)aluminum salt is preferred, and at least one selected from the group consisting of p-methoxyphenol, hydroquinone, benzoquinone, BHT, TEMPO, TEMPOL, and tris(N-nitroso-N-phenylhydroxylamine)aluminum salt is more preferred.

When the ink according to the present disclosure contains a polymerization inhibitor, the content of the polymerization inhibitor is preferably 0.01% by mass to 2.0% by mass, more preferably 0.02% by mass to 1.0% by mass, and particularly preferably 0.03% by mass to 0.5% by mass based on the total amount of the ink.

### Solvent

The ink according to the present disclosure may contain a solvent.

Examples of the solvent include ketones such as acetone, methyl ethyl ketone, and diethyl ketone; alcohols such as methanol, ethanol, 2-propanol, 1-propanol, 1-butanol, and tert-butyl alcohol; chlorine-based solvents such as chloroform and methylene chloride; aromatic solvents such as benzene and toluene; ester solvents such as ethyl acetate, butyl acetate, and isopropyl acetate; ether solvents such as diethyl ether, tetrahydrofuran, and dioxane; and glycol ether solvents such as ethylene glycol monomethyl ether and ethylene glycol dimethyl ether.

When the ink according to the present disclosure contains a solvent, from the viewpoint of further reducing the effect on a substrate, the content of the solvent is preferably 5% by mass or less, more preferably 0.01% by mass to 5% by mass, and particularly preferably 0.01% by mass to 3% by mass based on the total amount of the ink.

### Water

The ink according to the present disclosure may contain a trace amount of water as long as the advantageous effects of the present invention are not impaired.

However, from the viewpoint of more effectively obtaining the advantageous effects of the present invention, the ink according to the present disclosure is preferably a non-aqueous ink, which contains substantially no water. Specifically, the content of water is preferably 3% by mass or less, more preferably 2% by mass or less, and particularly preferably 1% by mass or less based on the total amount of the ink.

### Colorant

The ink according to the present disclosure may contain a colorant.

The colorant is not particularly limited and can be freely selected from publicly known colorants such as pigments, water-soluble dyes, and disperse dyes and used. Of these colorants, pigments are more preferably included from the viewpoint of good weather resistance and high color reproducibility.

The pigments are not particularly limited and can be appropriately selected according to the purpose. Examples of the pigments include publicly known organic pigments and inorganic pigments. Examples of the pigments further include resin particles dyed with a dye, and commercially available pigment dispersions and surface-treated pigments (for example, dispersions obtained by dispersing a pigment in water, a liquid compound, an insoluble resin, or the like serving as a dispersion medium and pigments having surfaces treated with a resin, a pigment derivative, or the like).

Examples of the organic pigments and the inorganic pigments include yellow pigments, red pigments, magenta pigments, blue pigments, cyan pigments, green pigments, orange pigments, violet pigments, brown pigments, black pigments, and white pigments.

In the case where a pigment is used as the colorant, a pigment dispersing agent may be used as required in preparation of pigment particles.

Regarding the colorants, such as pigments, and the pigment dispersing agents, known publications such as paragraphs 0152 to 0158 of JP2011-225848A and paragraphs 0132 to 0149 of JP2009-209352A can be referred to if necessary.

When the ink according to the present disclosure contains a colorant, the content of the colorant can be, for example, 0.05% by mass to 20% by mass and is preferably 0.2% by mass to 10% by mass based on the total amount of the ink.

### Other Components

The ink according to the present disclosure may contain components other than the components described above.

Examples of the other components include an ultraviolet absorber, an antioxidant, a co-sensitizer, a color-fading inhibitor, and an electroconductive salt.

Regarding the other components, known publications such as JP2011-225848A and JP2009-209352A can be referred to if necessary.

### Preferred Physical Properties

The viscosity of the ink according to the present disclosure is not particularly limited.

The ink according to the present disclosure preferably has a viscosity of 10 mPa·s to 50 mPa·s at 25°C, more preferably has a viscosity of 10 mPa·s to 30 mPa·s at 25°C, and still more preferably has a viscosity of 10 mPa·s to 25 mPa·s at 25°C. The viscosity of the ink can be adjusted by, for example, adjusting the compositional ratio of components contained in the ink.

Herein, the viscosity refers to a value measured by using a viscometer. For example, a VISCOMETER RE-85L (manufactured by Toki Sangyo Co., Ltd.) can be used as the viscometer.

When the viscosity of the ink is within the above preferred range, ejection stability can be further improved.

The surface tension of the ink according to the present disclosure is not particularly limited.

The ink according to the present disclosure preferably has a surface tension of 20 mN/m to 30 mN/m at 30°C and more preferably has a surface tension of 23 mN/m to 28 mN/m at 30°C. When a film is formed on a substrate such as a polyolefin, PET, coated paper, or uncoated paper, the surface tension is preferably 30 mN/m or less from the viewpoint of wettability, and 20 mN/m or more from the viewpoint of permeability and reduction in bleeding.

Herein, the surface tension refers to a value measured by using a surface tensiometer. For example, a DY-700 (manufactured by Kyowa Interface Science Co., Ltd.) can be used as the surface tensiometer.

### Method for Forming Image

A method for forming an image according to the present disclosure has a step of applying, onto a substrate, the above-described ink according to the present disclosure to form an ink film (that is, an image before curing) (hereinafter, also referred to as an "application step"), and a step of irradiating the ink film with an active energy ray to cure the ink film, thereby obtaining an image (hereinafter, also referred to as an "irradiation step").

The method for forming an image according to the present disclosure may optionally have another step.

### Application Step

The application step is a step of applying, onto a substrate, the above-described ink according to the present disclosure to form an ink film.

An embodiment of applying the ink according to the present disclosure onto a substrate may be any embodiment using a publicly known method such as a coating method, an immersion method, a printing method, or an ink jet method. Of these, an embodiment in which the ink according to the present disclosure is applied onto a substrate by the ink jet method is particularly preferred.

The image before curing, which is the ink film, is not particularly limited, and may be a solid image or a pattern image (such as a character, a figure, or a symbol).

The substrate is not particularly limited, and, for example, substrates that are publicly known as supports or recording materials can be used.

Examples of the substrate include paper, paper laminated with a plastic (such as polyethylene, polypropylene, or polystyrene), metal sheets (such as sheets made of a metal, e.g., aluminum, zinc, or copper), plastic films (such as films made of a polyvinyl chloride (PVC) resin, cellulose diacetate, cellulose triacetate, cellulose propionate, cellulose butyrate, cellulose acetate butyrate, cellulose nitrate, polyethylene terephthalate (PET), polyethylene (PE), polystyrene (PS), polypropylene (PP), polycarbonate (PC), polyvinylacetal, an acrylic resin, or the like), paper laminated with any of the metals, paper on which any of the metals is deposited by vapor deposition, plastic films laminated with any of the metals, and plastic films on which any of the metals is deposited by vapor deposition.

The ink according to the present disclosure is capable of forming a film having good adhesiveness to a substrate and thus is particularly suitable when a non-absorbable substrate is used.

The non-absorbable substrate is preferably a plastic substrate such as a polyvinyl chloride (PVC) substrate, a polystyrene (PS) substrate, a polycarbonate (PC) substrate, a polyethylene terephthalate (PET) substrate, a polypropylene (PP) substrate, or an acrylic resin substrate.

The application of the ink by the ink jet method can be performed by using a publicly known ink jet recording apparatus.

The ink jet recording apparatus is not particularly limited, and a publicly known ink jet recording apparatus that can achieve an intended resolution can be freely selected and used. Specifically, any publicly known ink jet recording apparatus such as a commercially available ink jet recording apparatus can perform the ejection of the ink onto a substrate in the method for forming an image.

Besides the ink jet method, a publicly known coating method or printing method can also be used for applying the ink onto a substrate in the present disclosure.

The application (coating) of the ink by a coating method can be carried out by using a coating device such as a bar coater, a roll coater, a slit coater, or a spin coater.

An example of the ink jet recording apparatus is an apparatus that includes an ink supply system, a temperature sensor, and heating means.

The ink supply system includes, for example, a source tank including an ink, a supply line, an ink supply tank arranged on the immediate upstream of an ink jet head, a filter, and a piezoelectric ink jet head. The piezoelectric ink jet head can be driven so that multi-size dots of preferably 1 pL to 100 pL and more preferably 8 pL to 30 pL can be ejected at a resolution of preferably 320 dpi (dot per inch) × 320 dpi to 4,000 dpi × 4,000 dpi, more preferably 400 dpi × 400 dpi to 1,600 dpi × 1,600 dpi, and still more preferably 720 dpi × 720 dpi to 1,600 dpi × 1,600 dpi. The dpi represents the number of dots per 2.54 cm (1 inch).

### Irradiation Step

The irradiation step is a step of irradiating the ink film formed on the substrate with active energy rays to cure the ink film, thereby obtaining an image.

The irradiation of the ink film with active energy rays causes polymerization reaction of the specific monomer in the ink film to proceed, and enables fixing of the resulting image to the substrate and improvement of, for example, the film hardness of the image.

Examples of the active energy rays that can be used in the irradiation step include ultraviolet rays (UV light), visible rays, and electron beams. Of these, UV light is preferred.

The peak wavelength of the active energy rays (light) is preferably 200 nm to 405 nm, more preferably 220 nm to 390 nm, and still more preferably 220 nm to 385 nm.

A peak wavelength in the range of 200 nm to 310 nm is also preferred, and a peak wavelength in the range of 200 nm to 280 nm is also preferred.

An exposure surface illuminance during the irradiation with the active energy rays (light) is, for example, 10 mW/cm² to 2,000 mW/cm², and preferably 20 mW/cm² to 1,000 mW/cm².

Energy of the active energy rays (light) applied to the ink film (hereinafter, also referred to as "exposure energy") is, for example, 10 mJ/cm² to 2,000 mJ/cm², and preferably 20 mJ/cm² to 1,000 mJ/cm².

As sources for generating active energy rays (light), for example, mercury lamps, metal halide lamps, UV fluorescent lamps, gas lasers, and solid-state lasers are widely known.

Replacement of the above light sources mentioned as examples by semiconductor ultraviolet light-emitting devices is very useful from the industrial and environmental standpoints.

Of the semiconductor ultraviolet light-emitting devices, LEDs (light emitting diodes) and LDs (laser diodes) have small sizes, enhanced lives, high efficiencies, and low costs and are expected to be the light sources.

The light sources are each preferably a metal halide lamp, an extra-high-pressure mercury lamp, a high-pressure mercury lamp, a medium-pressure mercury lamp, a low-pressure mercury lamp, an LED, or a blue-violet laser.

Of these, in the case where a sensitizer and a photopolymerization initiator are used in combination, an extra-high-pressure mercury lamp capable of applying light having a wavelength of 365 nm, 405 nm, or 436 nm, a high-pressure mercury lamp capable of applying light having a wavelength of 365 nm, 405 nm, or 436 nm, or an LED capable of applying light having a wavelength of 355 nm, 365 nm, 385 nm, 395 nm, or 405 nm is more preferred, and an LED capable of applying light having a wavelength of 355 nm, 365 nm, 385 nm, 395 nm, or 405 nm is most preferred.

In the irradiation step, the ink applied onto the substrate is preferably irradiated with active energy rays for 0.01 seconds to 120 seconds and more preferably 0.1 seconds to 90 seconds.

Regarding irradiation conditions and a basic irradiation method, the irradiation conditions and the irradiation method disclosed in JP1985-132767A (JP-S60-132767A) can be applied in a similar manner.

Specifically, the method for irradiation with active energy rays is preferably a method in which a light source is disposed on both sides of a head unit including a device for ejecting an ink, and the head unit and the light sources are scanned by a so-called shuttle method or a method in which irradiation with active energy rays is conducted with a separate light source that is not driven.

The irradiation with active energy rays is preferably conducted after a certain period of time (preferably 0.01 seconds to 120 seconds, and more preferably 0.01 seconds to 60 seconds) after the ink is landed, heated, and dried.

### Heating Drying Step

The method for forming an image may further optionally have a heating drying step after the application step and before the irradiation step.

Examples of the heating means include, but are not particularly limited to, a heat drum, hot air, an infrared lamp, a hot oven, and heating with a heating plate.

The heating temperature is preferably 40°C or higher, more preferably 40°C to 150°C, and still more preferably 40°C to 80°C.

The heating time can be appropriately determined in consideration of the composition of the ink and the printing speed.

The ink having been fixed by heating is irradiated with active energy rays in the irradiation step to be further fixed by light. In the irradiation step, the fixing is preferably conducted by using UV light, as described above.

### EXAMPLES

Hereafter, Examples of the present disclosure will be described; however, the present disclosure is not limited by the Examples described below.

In the description below, "%" means "% by mass" unless otherwise noted.

### Preparation of Amine A

The following compounds were prepared as an amine A used in Examples.

The compounds have number-average molecular weights (Mn) shown in Table 1 below.

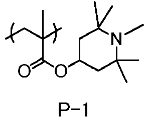

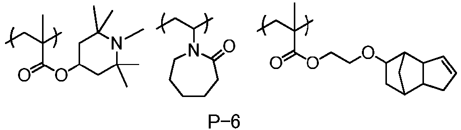

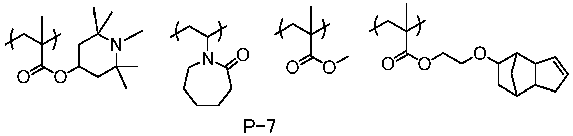

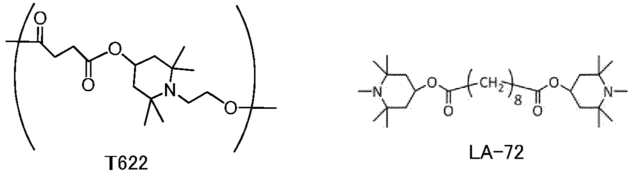

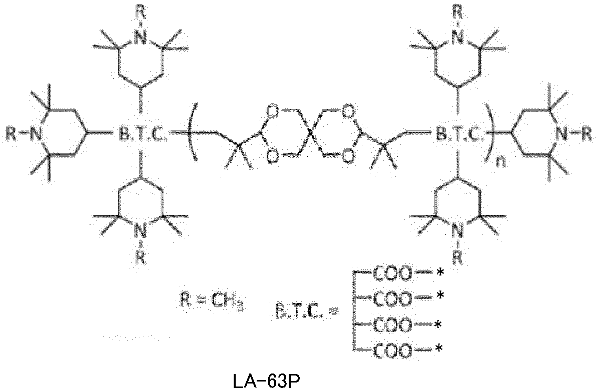

Here, T622 is "TINUVIN (registered trademark) 622SF" manufactured by BASF, LA-72 is "ADK STAB (registered trademark) LA-72" manufactured by ADEKA Corporation, and LA-63P is "ADK STAB LA-63P" manufactured by ADEKA Corporation.

P-1, P-6, and P-7 are compounds synthesized as described below.

### Synthesis of P-1

In a 500 mL three-necked flask equipped with a condenser, 96.13 g of methyl propylene glycol was weighed and heated at 75°C while stirring in a nitrogen stream.

A mixed solution separately prepared by mixing 59.77 g of methyl propylene glycol, 150 g of pentamethylpiperidyl methacrylate (raw material monomer), 5.77 g of V-601 (initiator manufactured by FUJIFILM Wako Pure Chemical Corporation, hereinafter, the same), and 5.71 g of dodecyl mercaptan was added dropwise to the flask over a period of two hours. After completion of the dropwise addition, the resulting mixture was heated at 75°C for four hours and then further stirred at 90°C for two hours to react the mixture.

The resulting reaction solution was allowed to cool. The reaction solution after being allowed to cool was poured into 2,000 mL of water and purified by reprecipitation. The purified product was then dried under vacuum.

As a result, about 140 g of P-1 (pentamethylpiperidyl methacrylate homopolymer, number-average molecular weight (Mn): 2,000) was obtained.

### Synthesis of P-6

In a 500 mL three-necked flask equipped with a condenser, 96.85 g of methyl propylene glycol was weighed and heated at 75°C while stirring in a nitrogen stream.

A mixed solution separately prepared by mixing 60.27 g of methyl propylene glycol, 75 g of pentamethylpiperidyl methacrylate (raw material monomer), 30 g of N-vinylcaprolactam (raw material monomer), 45 g of dicyclopentenyloxyethyl methacrylate (raw material monomer; "FANCRYL (registered trademark) FA-512M", manufactured by Hitachi Chemical Co., Ltd.), 6.45 g of V-601 (initiator), and 4.96 g of dodecyl mercaptan was added dropwise to the flask over a period of two hours. After completion of the dropwise addition, the resulting mixture was heated at 75°C for four hours and then further stirred at 90°C for two hours to react the mixture.

The resulting reaction solution was allowed to cool. The reaction solution after being allowed to cool was poured into 2,000 mL of water and purified by reprecipitation. The purified product was then dried under vacuum.

As a result, about 140 g of P-6 (pentamethylpiperidyl methacrylate/N-vinylcaprolactam/dicyclopentenyloxyethyl methacrylate (= 50/20/30 [mass ratio]) copolymer, number-average molecular weight (Mn): 3,500) was obtained.

### Synthesis of P-7

In a 500 mL three-necked flask equipped with a condenser, 98.1 g of methyl propylene glycol was weighed and heated at 75°C while stirring in a nitrogen stream.

A mixed solution separately prepared by mixing 61.1 g of methyl propylene glycol, 75 g of pentamethylpiperidyl methacrylate (raw material monomer), 30 g of N-vinylcaprolactam (raw material monomer), 30 g of methyl methacrylate (raw material monomer), 15 g of dicyclopentenyloxyethyl methacrylate (raw material monomer; "FANCRYL (registered trademark) FA-512M", manufactured by Hitachi Chemical Co., Ltd.), 7.65 g of V-601 (initiator), and 5.87 g of dodecyl mercaptan was added dropwise to the flask over a period of two hours. After completion of the dropwise addition, the resulting mixture was heated at 75°C for four hours and then further stirred at 90°C for two hours to react the mixture.

The resulting reaction solution was allowed to cool. The reaction solution after being allowed to cool was poured into 2,000 mL of water and purified by reprecipitation. The purified product was then dried under vacuum.

As a result, about 140 g of P-7 (pentamethylpiperidyl methacrylate/N-vinylcaprolactam/methyl methacrylate/dicyclopentenyloxyethyl methacrylate (= 50/20/20/10 [mass ratio]) copolymer, number-average molecular weight (Mn): 3,500) was obtained. Preparation of Amine B

The following compounds were prepared as an amine B used in Examples.

Hereinafter, "nC₁₂H₂₅-" means a normal dodecyl group.

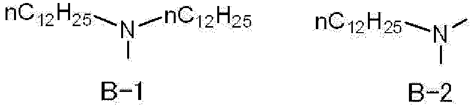

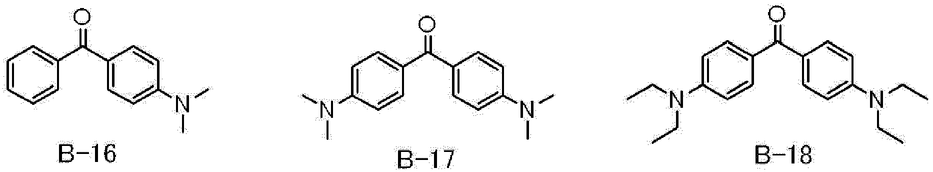

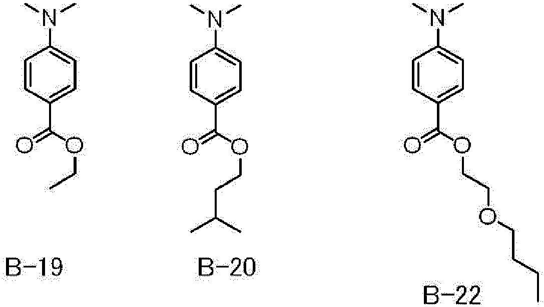

Furthermore, as comparative compounds for the amine B, CN-371 (amine acrylate; an amine compound having a radical-polymerizable group) manufactured by Sartomer (hereinafter, also referred to as "CN-371") and B-c1 (secondary amine) below were also prepared.

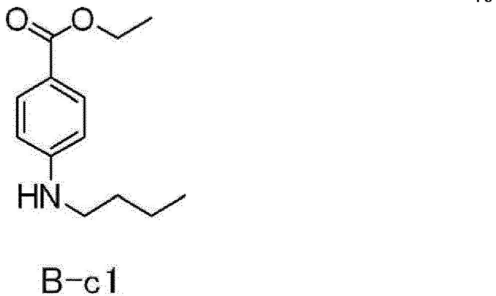

### Preparation of Sensitizer (D)

The following compounds were prepared as a sensitizer (D) used in Examples.

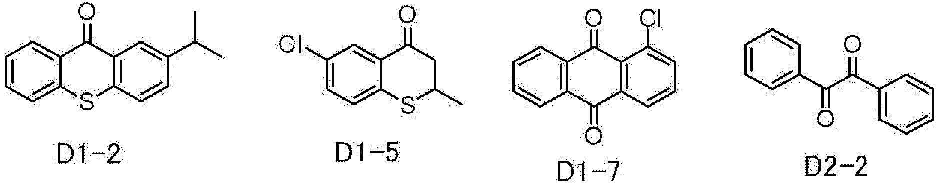

### Example 1

### Preparation of Ink

An ink (i.e., a photocurable ink composition) was prepared by mixing components having the following composition.

### Composition of Ink

·CTFA (Monofunctional monomer): 20.0% by mass
   [Cyclic trimethylolpropane formal acrylate (manufactured by Sartomer)]
·IBOA (Monofunctional monomer): 30.0% by mass
   [Isobornyl acrylate (manufactured by Sartomer)]
·PEA (Monofunctional monomer): 26.0% by mass
   [2-Phenoxyethyl acrylate (manufactured by Sartomer)]
·DVE3 (Bifunctional monomer): 1.0% by mass
   [Triethylene glycol divinyl ether (manufactured by BASF)]
·DPHA (Hexafunctional monomer): 5.0% by mass
   [Dipentaerythritol hexaacrylate (manufactured by Nippon Kayaku Co., Ltd.)]
·UV-12 (Polymerization inhibitor): 0.4% by mass
   [Nitroso-based polymerization inhibitor, tris(N-nitroso-N-phenylhydroxylamine)aluminum salt, "FLORSTAB UV12" manufactured by Kromachem Ltd.)
·Photopolymerization initiator: 3.0% by mass
   [Bis(2,4,6-trimethylbenzoyl)-phenylphosphine oxide; "IRGACURE (registered trademark) 819" manufactured by BASF]
·Sensitizer (D) shown in Table 1: 1.0% by mass
   [2-Isopropylthioxanthone (ITX; manufactured by LAMBSON Ltd.)
·Cyan mill base 1: 8.6% by mass
   [Cyan pigment dispersion having the composition below]
·Amine A shown in Table 1: 3.0% by mass
·Amine B shown in Table 1: 2.0% by mass

### Composition of Cyan Mill Base 1 (Cyan Pigment Dispersion)

·Cyan pigment: 20 parts by mass
   [C.I. Pigment Blue 15:3 (Cyan pigment, manufactured by Clariant)]
·High-molecular-weight dispersing agent: 5 parts by mass
   ["Solsperse 32000" manufactured by The Lubrizol Corporation)]
·Radical-polymerizable monomer: 75 parts by mass
   [2-Phenoxyethyl acrylate)]

### Evaluation Using Metal Halide Lamp as Light Source

The ink prepared above was subjected to the following evaluations using a metal halide lamp as a light source of UV light (ultraviolet rays).

Table 1 shows the results.

Irradiation of the UV light in the evaluations below was conducted by using a laboratory UV mini conveyor device CSOT (manufactured by GS Yuasa International Ltd.) in which an ozoneless metal halide lamp MAN250L was mounted.

### Glossiness of Cured Film

Glossiness of a cured film was evaluated by the following method using a commercially available ink jet recording apparatus (manufactured by FUJIFILM Corporation, LuxelJet (registered trademark) UV3600GT/XT: trade name) having a piezoelectric ink ejection head, and a PET (polyethylene terephthalate) film (manufactured by Toray Industries, Inc.) serving as a substrate.

The ink was ejected onto the substrate by using the ink jet recording apparatus under the ejection conditions described below, and the ink landed on the substrate was irradiated with UV light at an exposure energy of 1,000 mJ/cm² to form a 100% solid image (cured film).

### Ejection Conditions

·Number of channels: 318/head
·Driving frequency: 4.8 kHz/dot
·Ink droplet: 7 droplets, 42 pL
·Temperature of head nozzle: 45°C

The glossiness of the cured film obtained above was measured with a glossmeter "GM-268Plus" manufactured by Konica Minolta, Inc. at a measurement angle of 60 degrees. The glossiness of the cured film was evaluated on the basis of the measurement result in accordance with the evaluation criteria below.

In the evaluation criteria described below, the grade corresponding to the best glossiness of the cured film is "5".

### Evaluation Criteria of Glossiness of Cured Film

5: The glossiness is 25 GU (Gloss Unit) or more.
4: The glossiness is 20 GU or more and less than 25 GU.
3: The glossiness is 15 GU or more and less than 20 GU.
2: The glossiness is 10 GU or more and less than 15 GU.
1: The glossiness is less than 10 GU.

### Blocking Resistance of Cured Film

Blocking resistance of a cured film was evaluated by using a sample (PVC) for evaluation described below.

The sample (PVC) for evaluation was prepared as follows.

First, the ink prepared as described above was applied to a polyvinyl chloride (PVC) sheet serving as a substrate by using a No. 2 bar of a K Hand Coater manufactured by RK Print Coat Instruments Ltd. so as to have a thickness of 12 µm. Thus, a coating film was formed. The coating film was cured by being irradiated with UV light at an exposure energy of 1,000 mJ/cm² to form a cured film. As described above, the sample (PVC) for evaluation was prepared.

The PVC sheet used here was "AVERY (registered trademark) 400 GLOSS WHITE PERMANENT" manufactured by Avery Dennison Corporation.

The sample (PVC) for evaluation was cut to have a size of 20 mm × 20 mm to prepare an evaluation sample. Two evaluation samples each having this structure were prepared.

Next, the two evaluation samples were stacked such that the cured films were in contact with each other. Subsequently, a load of 10 N was applied for 10 seconds in a direction in which the two evaluation samples were pressed to each other, and the evaluation samples were then separated from each other.

Next, each of the cured films of the two evaluation samples was observed. The presence or absence of the mark of bonding between the cured films and the degree of the mark of the bonding were observed visually and with an optical microscope (magnification: 10X). The blocking resistance of the cured film was evaluated in accordance with the evaluation criteria described below.

In the evaluation criteria described below, the grade corresponding to the best blocking resistance of the cured film is "5".

### Evaluation Criteria of Blocking Resistance of Cured Film

5: No mark of bonding between the cured films is observed, and blocking resistance of the cured film is very good.
4: A mark of bonding between the cured films is observed in a range of more than 0% and less than 3% of the total area of the cured films. However, the blocking resistance of the cured film is at a level that does not cause any problem in practical application.
3: A mark of bonding between the cured films is observed in a range of 3% or more and less than 10% of the total area of the cured films. However, the blocking resistance of the cured film is within an acceptable range in practical application.
2: A mark of bonding between the cured films is observed in a range of 10% or more and less than 50% of the total area of the cured films. The blocking resistance of the cured film is out of an acceptable range in practical application.
1: A mark of bonding between the cured films is observed in a range of 50% or more of the total area of the cured films. The blocking resistance of the cured film is particularly poor. Scratch Resistance of Cured Film

Scratch resistance of a cured film was evaluated by using the above sample (PVC) for evaluation.

Specifically, the cured film of the sample (PVC) for evaluation was subjected to a scratch test three times under the conditions below. After the scratch test was performed, the state of a scratch on the cured film was visually observed to evaluate scratch resistance of the cured film in accordance with the evaluation criteria described below.

In the evaluation criteria described below, the grade corresponding to the best scratch resistance of the cured film is "5".

### Conditions for Scratch Test

·Test standard: ISO1518 (JIS K 5600)
·Apparatus: Reciprocating Abraser "Model 5900" manufactured by TABER Industries ·Scratching jig: 0.50 mm Scratch Tip for TABER scratch test
·Load: 2 N
·Scratch speed: 35 mm/s
·Number of reciprocating motions of scratching: 5

### Evaluation Criteria of Scratch Resistance of Cured Film

5: When the scratch test was performed three times, no mark was left three times on the cured film.
4: When the scratch test was performed three times, there were a case where no mark was left on the cured film and a case where a minor mark was left to such an extent that the cured film was not scraped.
3: When the scratch test was performed three times, a minor mark was left three times to such an extent that the cured film was not scraped.
2: When the scratch test was performed three times, there was a case where the surface of the cured film was scraped, but there was no case where the surface of the substrate was exposed.
1: When the scratch test was performed three times, there was a case where the surface of the cured film was scraped and the surface of the substrate was exposed.

### Adhesiveness of Cured Film

Adhesiveness of a cured film was evaluated by using the following sample (PS) for evaluation.

The sample (PS) for evaluation was prepared as follows.

The sample (PS) for evaluation was prepared as in the sample (PVC) for evaluation except that the PVC sheet was changed to a polystyrene (PS) sheet below.

The PS sheet used was "falcon hi impact polystyrene" manufactured by Robert Horne Group Limited.

The cured film of the sample (PS) for evaluation was subjected to a cross-hatch test in accordance with ISO2409 (cross-cut method) and evaluated in accordance with the evaluation criteria described below.

In the cross-hatch test, cutting was performed at a spacing of 1 mm to form a grid including 25 squares having a side of 1 mm.

In the evaluation criteria described below, the ratio (%) of squares that have flaked is a value calculated by the following formula. In the following formula, the total number of squares is 25. Ratio (%) of squares that have flaked = [(number of squares that have flaked)/(total number of squares)] × 100

In the evaluation criteria described below, the grade corresponding to the best adhesiveness of the cured film is "1".

### Evaluation Criteria of Adhesiveness of Cured Film

1: The ratio (%) of squares that have flaked was 0% or more and 5% or less.
2: The ratio (%) of squares that have flaked was more than 5% and 15% or less.
3: The ratio (%) of squares that have flaked was more than 15% and 35% or less.
4: The ratio (%) of squares that have flaked was more than 35% and 65% or less.
5: The ratio (%) of squares that have flaked was more than 65%.

### Storage Stability of Ink

The ink (50 mL) was placed in a 50 mL glass vial. The glass vial was covered with a lid and left to stand in a thermostatic chamber (60°C) for four weeks. A viscosity of the ink was measured before and after standing in the above manner. A rate of increase of the viscosity after standing relative to the viscosity before standing was determined to evaluate storage stability of the ink in accordance with the evaluation criteria described below. The viscosity of the ink was measured at a liquid temperature of 25°C by using a VISCOMETER RE-85L (manufactured by Toki Sangyo Co., Ltd.) as a viscometer.

In the evaluation criteria described below, the grade corresponding to the best storage stability of the ink is "5".

### Evaluation Criteria of Storage Stability of Ink

5: The rate of increase of the viscosity after standing relative to the viscosity before standing is less than 15%.
4: The rate of increase of the viscosity after standing relative to the viscosity before standing is 15% or more and less than 20%.
3: The rate of increase of the viscosity after standing relative to the viscosity before standing is 20% or more and less than 30%.
2: The rate of increase of the viscosity after standing relative to the viscosity before standing is 30% or more and less than 40%.
1: The rate of increase of the viscosity after standing relative to the viscosity before standing is 40% or more.

### Ejection Stability of Ink

A 100% solid image was formed under the same conditions as those in the evaluation of the glossiness of the cured film. This formation of the 100% solid image was continuously conducted for 60 minutes.

The number of nozzles in which ink clogging occurred during the continuous ejection for 60 minutes (nozzle losses) was determined, and ejection stability was evaluated in accordance with the evaluation criteria below.

In the evaluation criteria described below, the grade corresponding to the best ejection stability of the ink is "5".

### Ejection Conditions

·Number of channels: 318/head
·Driving frequency: 4.8 kHz/dot
·Ink droplet: 7 droplets, 42 pL
·Temperature of head nozzle: 45°C

### Evaluation Criteria of Ejection Stability of Ink

5: The number of nozzle losses is 0 or more and less than 3.
4: The number of nozzle losses is 3 or more and less than 5.
3: The number of nozzle losses is 5 or more and less than 7.
2: The number of nozzle losses is 7 or more and less than 10.
1: The number of nozzle losses is 10 or more.

### Evaluation Using LED as Light Source

Evaluations of the glossiness of the cured film, the blocking resistance of the cured film, and the scratch resistance of the cured film were conducted as in the above-described evaluations of these (that is, the glossiness of the cured film, the blocking resistance of the cured film, and the scratch resistance of the cured film) except that the metal halide lamp used as the light source was changed to an LED.

Irradiation of the UV light (LED) in these evaluations was conducted by using a laboratory 385 nm UV-LED irradiator (manufactured by CCS Inc.).

The exposure energy of the UV light (LED) applied to the ink film was 1,000 mJ/cm². Examples 2 to 13, 21 to 23, and Reference Examples 20, 24, and 25

The same operation as that in Example 1 was performed except that, in the preparation of the ink, the combination of the type of the amine A, the content of the amine A, the type of the amine B, the content of the amine B, and the type of the sensitizer was changed as shown in Tables 1 and 2.

Tables 1 and 2 show the results.

### Examples 14 to 19

The same operation as that in Example 6 was performed except that, in the preparation of the ink, the content of the amine A and the content of the amine B were changed as shown in Table 1 without changing the content mass ratio [amine B/amine A].

Table 1 shows the results.

In Examples 14 to 19, the content of PEA was adjusted such that the total content of the amine A, the amine B, and PEA was constant (that is, such that the contents of the components other than the amine A, the amine B, and PEA were not changed).

### Examples 26 to 30

The same operation as that in Example 6 was performed except that, in the preparation of the ink, the content of the sensitizer (D) was changed as shown in Table 2.

Table 2 shows the results.

In Examples 26 to 30, the content of PEA was adjusted such that the total content of the sensitizer (D) and PEA was constant (that is, such that the contents of the components other than the sensitizer (D) and PEA were not changed).

### Examples 31 to 33

The same operation as that in Example 6 was performed except that, in the preparation of the ink, the type of the sensitizer was changed as shown in Table 2.

Table 2 shows the results.

### Comparative Example 1

The same operation as that in Example 11 was performed except that, in the preparation of the ink, the amine B was not used, and the content of the amine A was changed from 3.0% by mass to 5.0% by mass (that is, such that the total content of the amine compounds was not changed).

Table 2 shows the results.

### Comparative Example 2

The same operation as that in Example 11 was performed except that, in the preparation of the ink, the amine A was not used, and the content of the amine B was changed from 2.0% by mass to 5.0% by mass (that is, such that the total content of the amine compounds was not changed).

Table 2 shows the results.

### Comparative Examples 3 and 4

The same operation as that in Example 11 was performed except that the amine B was changed to the comparative compound (CN-371 or B-c1) shown in Table 2.

Table 2 shows the results.

The comparative compounds (CN-371 and B-c1) shown in Table 2 are as follows.

CN-371 is CN-371 (amine acrylate; an amine compound having a radical-polymerizable group) manufactured by Sartomer.

B-c1 is a secondary amine having the following structure.

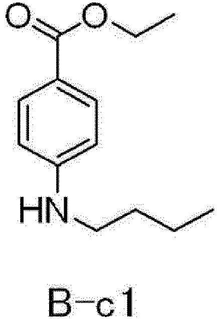

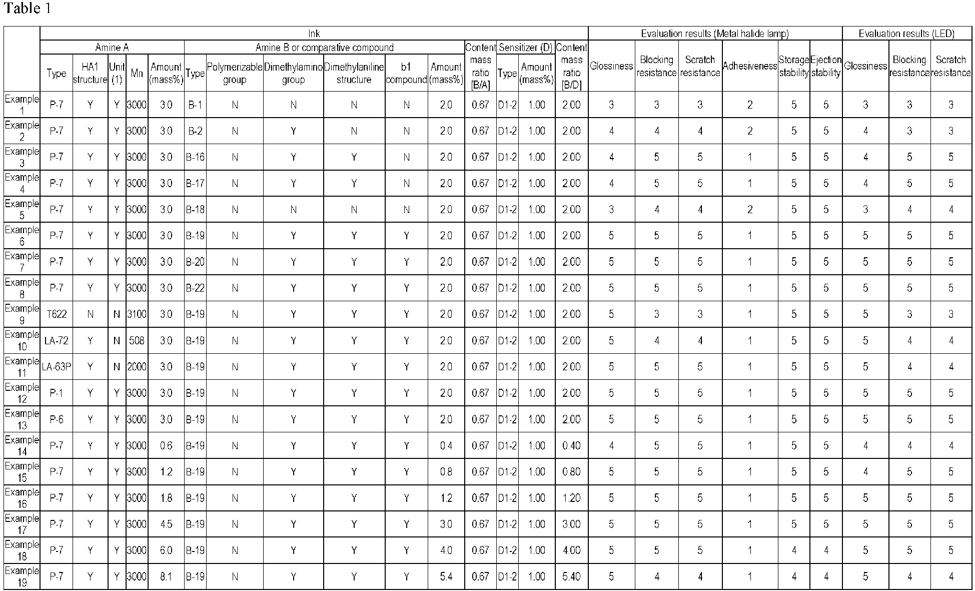

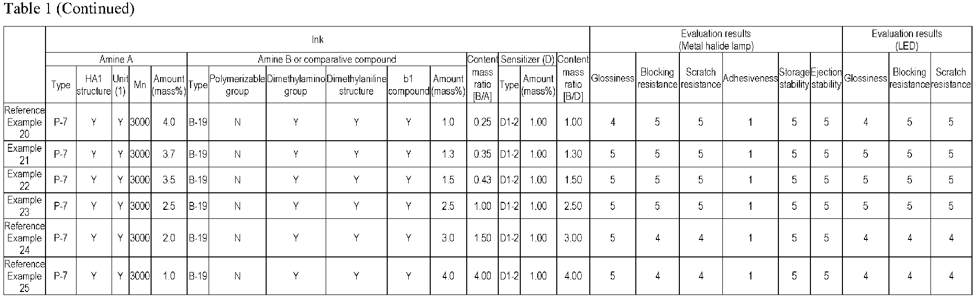

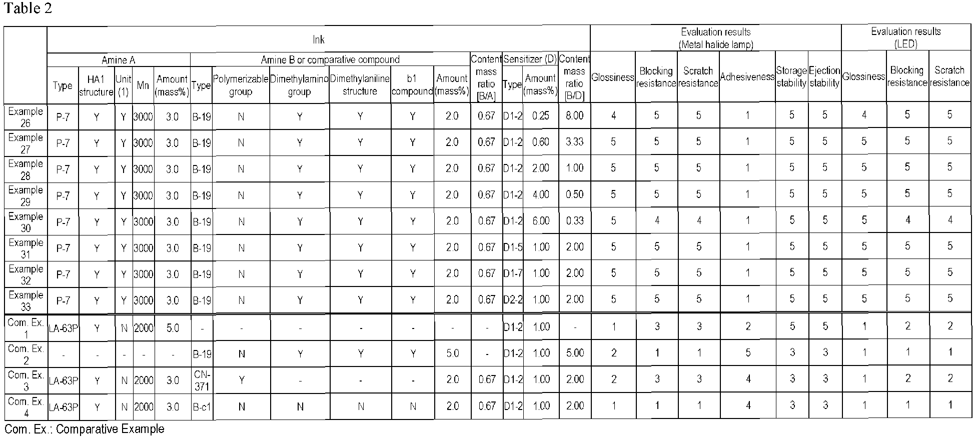

### Explanation of Tables 1 and 2

The column of "HA1 structure" in Amine A indicates whether the amine A has the hindered amine structure represented by formula (HA1). The case where the amine A has the hindered amine structure represented by formula (HA1) is denoted by "Y", and the case where the amine A does not have the hindered amine structure represented by formula (HA1) is denoted by "N".

The column of "Unit (1)" in Amine A indicates whether the amine A has the structural unit represented by formula (1). The case where the amine A has the structural unit represented by formula (1) is denoted by "Y", and the case where the amine A does not have the structural unit represented by formula (1) is denoted by "N".

The column of "Amount (mass%)" in Amine A indicates the content (% by mass) of the amine A based on the total amount of the ink.

The column of "Polymerizable group" in Amine B indicates whether the amine B has a radical-polymerizable group. The case where the amine B has a radical-polymerizable group is denoted by "Y", and the case where the amine B has no radical-polymerizable group is denoted by "N".

The column of "Dimethylamino group" in Amine B indicates whether the amine B has an N,N-dimethylamino group. The case where the amine B has an N,N-dimethylamino group is denoted by "Y", and the case where the amine B has no N,N-dimethylamino group is denoted by "N".

The column of "Dimethylaniline structure" in Amine B indicates whether the amine B has an N,N-dimethylaniline structure. The case where the amine B has an N,N-dimethylaniline structure is denoted by "Y", and the case where the amine B has no N,N-dimethylaniline structure is denoted by "N".

The column of "b1 compound" in Amine B indicates whether the amine B corresponds to a b1 compound (that is, a compound represented by formula (b1)). The case where the amine B corresponds to a b1 compound is denoted by "Y", and the case where the amine B does not correspond to a b1 compound is denoted by "N".

The column of "Amount (mass%)" in Amine B indicates the content (% by mass) of the amine B based on the total amount of the ink.

The content mass ratio [B/A] means a mass ratio of the content of the amine B to the content of the amine A.

The content mass ratio [B/D] means a mass ratio of the content of the amine B to the content of the sensitizer (D).

As shown in Tables 1 and 2, in Examples 1 to 33, in which the ink contained an amine A, which was an amine compound having an α-hydrogen atom and a hindered amine structure, and an amine B, which was a tertiary amine compound that had an α-hydrogen atom, that had no hindered amine structure, and that had no radical-polymerizable group, the cured films had high glossiness.

In contrast, in Comparative Example 1, in which the ink did not contain the amine B, the glossiness of the cured film decreased.

In Comparative Example 2, in which the ink did not contain the amine A, the glossiness of the cured film decreased. Furthermore, in Comparative Example 2, the blocking resistance, the scratch resistance, and the adhesiveness of the cured film also decreased.

In Comparative Example 3, in which the ink did not contain the amine B but contained the amine compound having a radical-polymerizable group (CN-371), the glossiness of the cured film decreased.

In Comparative Example 4, in which the ink did not contain the amine B but contained the secondary amine (B-c1), the glossiness of the cured film decreased. Furthermore, in Comparative Example 4, the blocking resistance, the scratch resistance, and the adhesiveness of the cured film also decreased.

The results of Examples 1 and 2 show that when the amine B has an N,N-dimethylamino group (Example 2), the glossiness of the cured film further improves.

The results of Examples 2 to 4 show that when the amine B has an N,N-dimethylaniline structure (Examples 3 and 4), the blocking resistance, the scratch resistance, and the adhesiveness of the cured film further improve.

The results of Examples 3 to 8 show that when the amine B corresponds to a b1 compound (that is, a compound represented by formula (b1)) (Examples 6 to 8), the glossiness of the cured film further improves.

The results of Examples 10 and 11 show that when the amine A has a Mn of from 1,000 to 10,000 (Example 11), the blocking resistance and the scratch resistance of the cured film further improve.

The results of Examples 11 and 12 show that when the amine A includes a unit (1) (Example 12), the blocking resistance and the scratch resistance of the cured film further improve.

The results of Examples 14 and 15 show that when the content of the amine A is 1.0% by mass or more (Example 15), the glossiness, the blocking resistance, and the scratch resistance of the cured film further improve.

The results of Examples 17 and 18 show that when the content of the amine A is 5.0% by mass or less (Example 17), the storage stability and the ejection stability of the ink further improve.

The results of Examples 14 to 16 show that when the mass ratio of the content of the amine B to the content of the sensitizer (D) (content mass ratio [B/D]) is 0.50 or more (Examples 15 and 16), the glossiness of the cured film further improves.

The results of Examples 18 and 19 show that when the mass ratio of the content of the amine B to the content of the sensitizer (D) (content mass ratio [B/D]) is 4.00 or less (Example 18), the blocking resistance and the scratch resistance of the cured film further improve.

The results of Reference Example 20 and Example 21 show that when the mass ratio of the content of the amine B to the content of the amine A (content mass ratio [B/A]) is 0.30 or more (Example 21), the glossiness of the cured film further improves.

The results of Example 23 and Reference Examples 24 and 25 show that when the mass ratio of the content of the amine B to the content of the amine A (content mass ratio [B/A]) is 1.00 or less (Example 23), the glossiness, the blocking resistance, and the scratch resistance of the cured film further improve.

The results of Examples 29 and 30 show that when the mass ratio of the content of the amine B to the content of the sensitizer (D) (content mass ratio [B/D]) is 0.50 or more (Example 29), the blocking resistance and the scratch resistance of the cured film further improve.

The results of Examples 26 and 27 show that when the mass ratio of the content of the amine B to the content of the sensitizer (D) (content mass ratio [B/D]) is 4.00 or less (Example 27), the glossiness of the cured film further improves.

## Claims

1. A photocurable ink composition comprising:
an amine A which is an amine compound having an α-hydrogen atom and a hindered amine structure;
an amine B which is a tertiary amine compound that has an α-hydrogen atom, that has no hindered amine structure, and that has no radical-polymerizable group;
at least one of a monofunctional radical-polymerizable monomer or a bifunctional radical-polymerizable monomer; and
a sensitizer (D) which is at least one of a compound represented by formula (D1) or formula (D1a) below or a compound represented by formula (D2) below,
wherein a total content of the monofunctional radical-polymerizable monomer and the bifunctional radical-polymerizable monomer is 50% by mass or more based on a total amount of the photocurable ink composition: 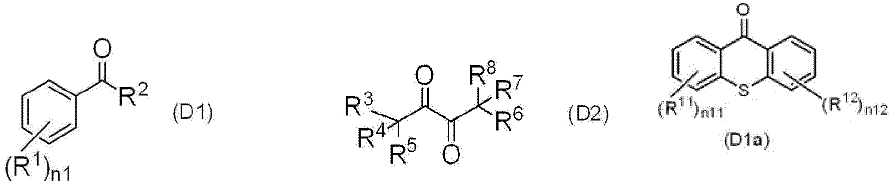
wherein, in formula (D1), R¹ represents a halogen atom, an alkyl group, an aryl group, a hydroxy group, a cyano group, a nitro group, an amino group, an alkylsulfanyl group, an alkylamino group, an alkoxy group, an alkoxycarbonyl group, an acyloxy group, an acyl group, a carboxy group, or a sulfo group;
R² represents an alkyl group or an aryl group;
n1 represents an integer of 0 to 5;
when n1 is an integer of 1 to 5, R² and at least one of R¹ may be bound together to form a ring; and
when n1 is an integer of 2 to 5, the plurality of R¹ may be the same or different,
wherein in formula (D1a), R¹¹ has the same definition as R¹ in formula (D1), n11 represents an integer of 0 to 4, and R¹² and n12 have the same definitions as R¹¹ and n11,
wherein, in formula (D2), R³ to R⁸ each independently represent a hydrogen atom, a halogen atom, an alkyl group, or an aryl group,
wherein a mass ratio of a content of the amine B to a content of the amine A is from 0.30 to 1.00,
wherein the hindered amine structure is a hindered amine structure represented by formula (HA0) below: 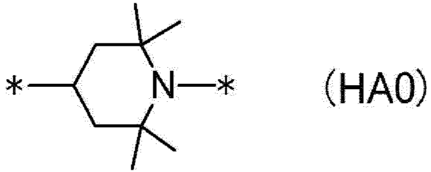
wherein n formula (HA0), * each represent a binding site,
and
wherein the ink compositions of Examples 1A to 22A and 24A and Comparative Examples 1A and 3A of EP 3 604 458 A1 are excluded from the scope of the claimed photocurable ink composition.

2. The photocurable ink composition according to claim 1, wherein the amine B has an N,N-dimethylamino group.

3. The photocurable ink composition according to claim 1 or 2, wherein the amine B has an N,N-dimethylaniline structure.

4. The photocurable ink composition according to any one of claims 1 to 3, wherein the amine B is a compound represented by formula (b1) below: 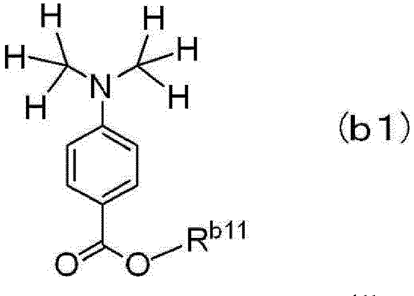 wherein, in formula (b1), R^{b11} represents an alkyl group or an alkoxyalkyl group.

5. The photocurable ink composition according to any one of claims 1 to 4, wherein the amine A has a structure represented by formula (HA1) below: 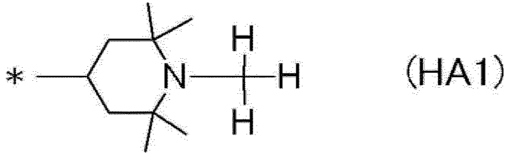 wherein, in formula (HA1), * represents a binding site.

6. The photocurable ink composition according to any one of claims 1 to 5, wherein the amine A has a number-average molecular weight of from 1,000 to 10,000.

7. The photocurable ink composition according to any one of claims 1 to 6, wherein the amine A includes a structural unit represented by formula (1) below: 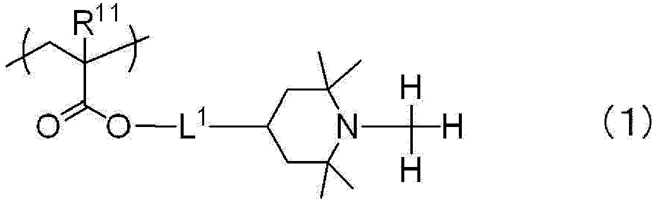 wherein, in formula (1), R¹¹ represents a hydrogen atom or a methyl group, and L¹ represents a single bond or a divalent linking group having 1 to 12 carbon atoms.

8. The photocurable ink composition according to any one of claims 1 to 7, wherein a content of the amine A is from 1.0% by mass to 5.0% by mass based on the total amount of the photocurable ink composition.

9. The photocurable ink composition according to any one of claims 1 to 8, wherein a content of the amine B is from 1.0% by mass to 5.0% by mass based on the total amount of the photocurable ink composition.

10. The photocurable ink composition according to any one of claims 1 to 9, wherein a mass ratio of a content of the amine B to a content of the sensitizer (D) is from 0.50 to 4.00.

11. Use of the photocurable ink composition according to any one of claims 1 to 10, as an ink jet ink.

12. A method for forming an image, comprising:
a step of applying, onto a substrate, the photocurable ink composition according to any one of claims 1 to 10 to form an ink film; and
a step of irradiating the ink film with an active energy ray to cure the ink film, thereby obtaining an image.

## Patentansprüche

1. Photohärtbare Tintenzusammensetzung, umfassend:
ein Amin A, das eine Aminverbindung mit einem α-Wasserstoffatom und einer gehinderten Aminstruktur ist;
ein Amin B, das eine tertiäre Aminverbindung mit einem α-Wasserstoffatom, mit keiner gehinderten Aminstruktur und mit keiner radikalisch polymerisierbaren Gruppe ist;
mindestens eines von einem monofunktionellen radikalisch polymerisierbaren Monomer und einem bifunktionellen radikalisch polymerisierbaren Monomer; und
einen Sensibilisator (D), der mindestens eine von einer Verbindung, die durch Formel (D1) oder Formel (D1a) unten dargestellt wird, und einer Verbindung, die durch Formel (D2) unten dargestellt wird, ist,
wobei ein Gesamtgehalt des monofunktionellen radikalisch polymerisierbaren Monomers und des bifunktionellen radikalisch polymerisierbaren Monomers 50 Massen-% oder mehr basierend auf einer Gesamtmenge der photohärtbaren Tintenzusammensetzung beträgt: 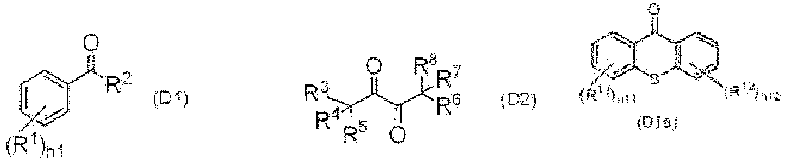
wobei in Formel (D1) R¹ ein Halogenatom, eine Alkylgruppe, eine Arylgruppe, eine Hydroxygruppe, eine Cyanogruppe, eine Nitrogruppe, eine Aminogruppe, eine Alkylsulfanylgruppe, eine Alkylaminogruppe, eine Alkoxygruppe, eine Alkoxycarbonylgruppe, eine Acyloxygruppe, eine Acylgruppe, eine Carboxygruppe oder eine Sulfogruppe darstellt;
R² eine Alkylgruppe oder eine Arylgruppe darstellt;
n1 eine ganze Zahl von 0 bis 5 darstellt;
wenn n1 eine ganze Zahl von 1 bis 5 ist, R² und mindestens eines von R¹ zusammen gebunden sein können, um einen Ring zu bilden; und
wenn n1 eine ganze Zahl von 2 bis 5 ist, die mehreren R¹ gleich oder unterschiedlich sein können,
wobei in Formel (D1a) R¹¹ die gleiche Definition wie R¹ in Formel (D1) aufweist, n11 eine ganze Zahl von 0 bis 4 darstellt und R¹² und n12 die gleichen Definitionen wie R¹¹ und n11 aufweisen,
wobei in Formel (D2) R³ bis R⁸ jeweils unabhängig voneinander ein Wasserstoffatom, ein Halogenatom, eine Alkylgruppe oder eine Arylgruppe darstellen,
wobei ein Massenverhältnis eines Gehalts des Amins B zu einem Gehalt des Amins A von 0,30 bis 1,00 beträgt,
wobei die gehinderte Aminstruktur eine gehinderte Aminstruktur ist, die durch die Formel (HA0) unten dargestellt wird: 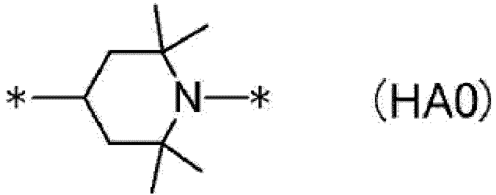
wobei in Formel (HA0) * jeweils eine Bindungsstelle darstellen,
und
wobei die Tintenzusammensetzungen von Beispielen 1A bis 22A und 24A und
Vergleichsbeispielen 1A und 3A von EP 3 604 458 A1 von dem Schutzumfang der beanspruchten photohärtbaren Tintenzusammensetzung ausgeschlossen sind.

2. Photohärtbare Tintenzusammensetzung nach Anspruch 1, wobei das Amin B eine N,N-Dimethylamino-Gruppe aufweist.

3. Photohärtbare Tintenzusammensetzung nach Anspruch 1 oder 2, wobei das Amin B eine N,N-Dimethylanilin-Struktur aufweist.

4. Photohärtbare Tintenzusammensetzung nach einem der Ansprüche 1 bis 3, wobei das Amin B eine Verbindung ist, die durch Formel (b1) unten dargestellt wird: 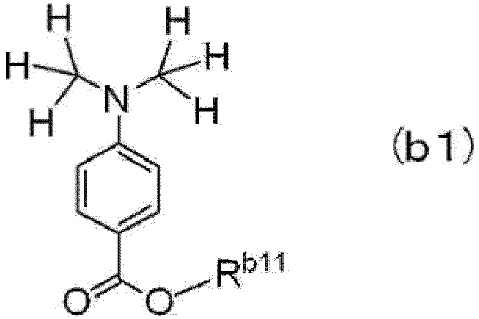 wobei in Formel (b1) R^{b11} eine Alkylgruppe oder eine Alkoxyalkylgruppe darstellt.

5. Photohärtbare Tintenzusammensetzung nach einem der Ansprüche 1 bis 4, wobei das Amin A eine Struktur aufweist, die durch Formel (HA1) unten dargestellt wird: 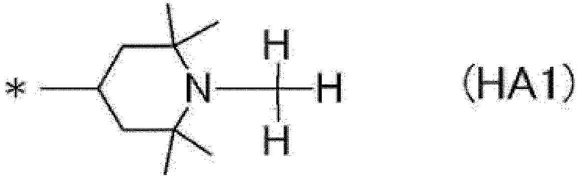 wobei in Formel (HA1) * eine Bindungsstelle darstellt.

6. Photohärtbare Tintenzusammensetzung nach einem der Ansprüche 1 bis 5, wobei das Amin A ein zahlenmittleres Molekulargewicht von 1.000 bis 10.000 aufweist.

7. Photohärtbare Tintenzusammensetzung nach einem der Ansprüche 1 bis 6, wobei das Amin A eine Struktureinheit, die durch Formel (1) unten dargestellt wird, enthält: 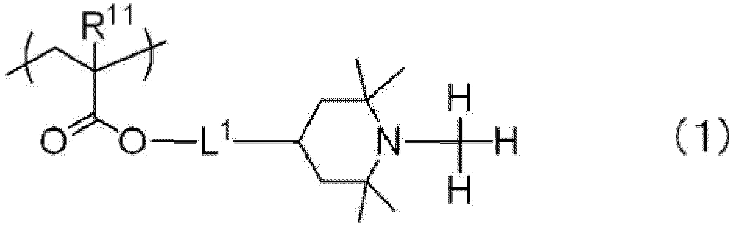 wobei in Formel (1) R¹¹ ein Wasserstoffatom oder eine Methylgruppe darstellt und L¹ eine Einfachbindung oder eine divalente verbindende Gruppe mit 1 bis 12 Kohlenstoffatomen darstellt.

8. Photohärtbare Tintenzusammensetzung nach einem der Ansprüche 1 bis 7, wobei ein Gehalt des Amins A von 1,0 Massen-% bis 5,0 Massen-% basierend auf der Gesamtmenge der photohärtbaren Tintenzusammensetzung beträgt.

9. Photohärtbare Tintenzusammensetzung nach einem der Ansprüche 1 bis 8, wobei ein Gehalt des Amins B von 1,0 Massen-% bis 5,0 Massen-% basierend auf der Gesamtmenge der photohärtbaren Tintenzusammensetzung beträgt.

10. Photohärtbare Tintenzusammensetzung nach einem der Ansprüche 1 bis 9, wobei ein Massenverhältnis eines Gehalts des Amins B zu einem Gehalt des Sensibilisators (D) von 0,50 bis 4,00 beträgt.

11. Verwendung der photohärtbaren Tintenzusammensetzung nach einem der Ansprüche 1 bis 10 als eine Tintenstrahltinte.

12. Verfahren zum Erzeugen eines Bildes, umfassend:
einen Schritt des Aufbringens der photohärtbaren Tintenzusammensetzung nach einem der Ansprüche 1 bis 10 auf ein Substrat, um einen Tintenfilm zu bilden; und
einen Schritt des Bestrahlens des Tintenfilms mit einem Strahl aktiver Energie, um den Tintenfilm zu härten, wodurch ein Bild erhalten wird.

## Revendications

1. Composition d'encre photodurcissable comprenant :
une amine A qui est un composé d'amine ayant un atome d'hydrogène α et une structure d'amine encombrée ;
une amine B qui est un composé d'amine tertiaire qui a un atome d'hydrogène α, qui n'a pas de structure d'amine encombrée et qui n'a pas de groupe polymérisable par voie radicalaire ;
au moins l'un d'un monomère polymérisable par voie radicalaire monofonctionnel et d'un monomère polymérisable par voie radicalaire bifonctionnel ; et
un sensibilisateur (D) qui est au moins l'un d'un composé représenté par formule (D1) ou formule (D1a) ci-dessous ou d'un composé représenté par formule (D2) ci-dessous,
dans laquelle une teneur totale du monomère polymérisable par voie radicalaire monofonctionnel et du monomère polymérisable par voie radicalaire bifonctionnel est de 50 % en masse ou plus sur la base d'une quantité totale de la composition d'encre photodurcissable : 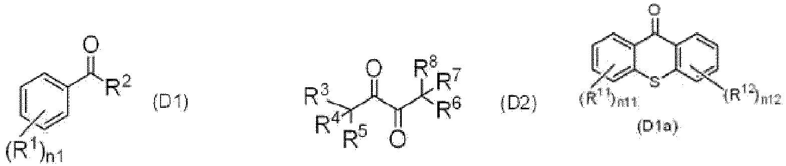
dans laquelle, dans formule (D1), R¹ représente un atome d'halogène, un groupe alkyle, un groupe aryle, un groupe hydroxy, un groupe cyano, un groupe nitro, un groupe amino, un groupe alkylsulfanyl, un groupe alkylamino, un groupe alkoxy, un groupe alkoxycarbonyle, un groupe acyloxy, un groupe acyle, un groupe carboxyle ou un groupe sulfo ;
R² représente un groupe alkyle ou un groupe aryle ;
n1 représente un entier de 0 à 5;
lorsque n1 est un entier de 1 à 5, R² et au moins l'un de R¹ peuvent être liés ensemble pour former un cycle ; et
lorsque n1 est un entier de 2 à 5, la pluralité de R¹ peut être identique ou différente, dans laquelle, dans formule (D1a), R¹¹ a la même définition que R¹ dans formule (D1), n11 représente un entier de 0 à 4, et R¹² et n12 ont les mêmes définitions que R¹¹ et n11,
dans laquelle, dans formule (D2), R³ à R⁸ représentent chacun indépendamment un atome d'hydrogène, un atome d'halogène, un groupe alkyle ou un groupe aryle,
dans laquelle un rapport de masse d'une teneur de l'amine B à une teneur de l'amine A est de 0,30 à 1,00,
dans laquelle la structure d'amine encombrée est une structure d'amine encombrée représentée par formule (HA0) ci-dessous : 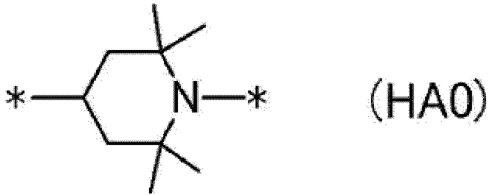
dans laquelle dans formule (HA0), * chacun représente un site de liaison,
et
dans laquelle les compositions d'encre d'Exemples 1A à 22A et 24A et d'Exemples Comparatifs 1A et 3A de EP 3 604 458 A1 sont exclues du champ de la composition d'encre photodurcissable revendiquée.

2. Composition d'encre photodurcissable selon la revendication 1, dans laquelle l'amine B a un groupe N,N-diméthylamino.

3. Composition d'encre photodurcissable selon la revendication 1 ou la revendication 2, dans laquelle l'amine B a une structure de N,N-diméthylaniline.

4. Composition d'encre photodurcissable selon l'une quelconque des revendications 1 à 3, dans laquelle l'amine B est un composé représenté par formule (b1) ci-dessous : 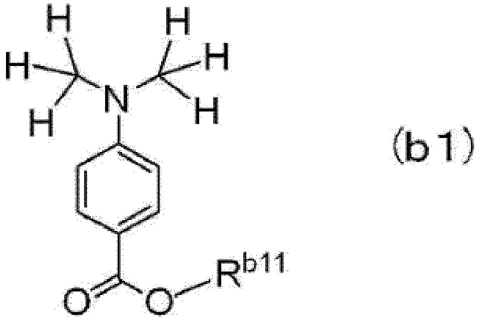 dans laquelle, dans formule (b1), R^{b11} représente un groupe alkyle ou un groupe alkoxyalkyle.

5. Composition d'encre photodurcissable selon l'une quelconque des revendications 1 à 4, dans laquelle l'amine A a une structure représentée par formule (HA1) ci-dessous : 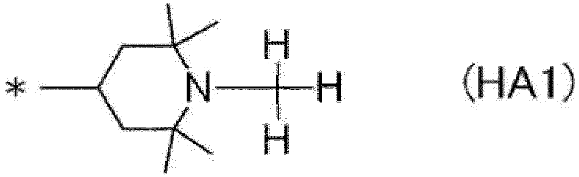 dans laquelle, dans formule (HA1), * représente un site de liaison.

6. Composition d'encre photodurcissable selon l'une quelconque des revendications 1 à 5, dans laquelle l'amine A a un poids moléculaire moyen en nombre de 1 000 à 10 000.

7. Composition d'encre photodurcissable selon l'une quelconque des revendications 1 à 6, dans laquelle l'amine A inclut une unité structurelle représentée par formule (1) ci-dessous : 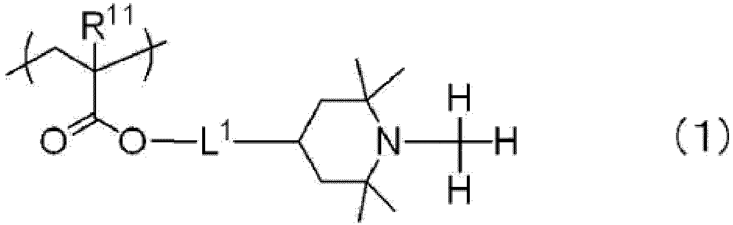 dans laquelle, dans formule (1), R¹¹ représente un atome d'hydrogène ou un groupe méthyle, et L' représente une liaison simple ou un groupe de liaison divalent ayant de 1 à 12 atomes de carbone.

8. Composition d'encre photodurcissable selon l'une quelconque des revendications 1 à 7, dans laquelle une teneur de l'amine A est de 1,0 % en masse à 5,0 % en masse par rapport à la quantité totale de la composition d'encre photodurcissable.

9. Composition d'encre photodurcissable selon l'une quelconque des revendications 1 à 8, dans laquelle une teneur de l'amine B est de 1,0 % en masse à 5,0 % en masse par rapport à la quantité totale de la composition d'encre photodurcissable.

10. Composition d'encre photodurcissable selon l'une quelconque des revendications 1 à 9, dans laquelle un rapport de masse d'un contenu de l'amine B à un contenu du sensibilisateur (D) est de 0,50 à 4,00.

11. Utilisation de la composition d'encre photodurcissable selon l'une quelconque des revendications 1 à 10, comme une encre pour jet d'encre.

12. Procédé pour former une image, comprenant :
une étape d'application, sur un substrat, de la composition d'encre photodurcissable selon l'une quelconque des revendications 1 à 10 pour former un film d'encre ; et
une étape d'irradiation du film d'encre avec un rayon d'énergie active pour durcir le film d'encre, obtenant ainsi une image.
